# EUROPEAN PATENT APPLICATION

(11) **EP 0 917 149 A2**
(43) Date of publication of application: **19.05.1999**
(21) Application number: 98308532.5
(22) Date of filing: 19.10.1998
(51) Int. Cl.: G11B 27/10, G11B 27/32, G11B 27/034, G11B 20/12, G11B 27/34, H04N 5/85

(54) **Information processing apparatus, information processing method, presentation medium and recording medium**

(30) Priority: 21.10.1997 JP 288180/97; 30.04.1998 JP 120389/98; 27.02.1998 JP 46857/98; 27.02.1998 JP 46858/98; 21.10.1997 JP 288181/97; 30.04.1998 JP 120391/98
(71) Applicant: SONY CORPORATION, Tokyo 141 (JP)
(72) Inventor: Hamada, Toshiya, Shinagawa-ku, Tokyo (JP); Fujinami, Yasushi, Shinagawa-ku, Tokyo (JP)
(74) Representative: Robinson, Nigel Alexander Julian

(57) **Abstract**

A system for improving the ease of editing in a recordable optical disk system is described formed of a first control means for controlling a plurality of pieces of data on a 1-on-1 basis; a second control means for controlling any arbitrary number of said first control means; and a third control means for controlling any arbitrary range in said second control means.

## Description

In general, the present invention relates to an information processing apparatus, an information processing method, a presentation medium and a recording medium. More particularly, the present invention relates to an information processing apparatus, an information processing method, a presentation medium and a recording medium that allow editing to be carried out more easily.

It is possible to properly edit video and audio data recorded in a recording medium such as a disc as required. In editing work, typically, a range of part of a piece of video data is joined to a part of other video data or a range of part of video data is erased.

When such traditional work to edit data is carried out, however, it is the data itself that is linked or erased, giving rise to a problem that it takes labor and time to do editing including re-editing data which has once been edited.

The present invention addresses the problem described above to allow editing work to be carried out easily and speedily.

An information processing apparatus according to one aspect of the present invention is characterized in that the apparatus including:
a first control means for controlling a plurality of pieces of data on a 1-on-1 basis;
a second control means for controlling any arbitrary number of the first control means; and
a third control means for controlling any arbitrary range in the second control means.

An information processing method according to another aspect of present invention is characterized in that the method including:
a first control step of controlling a plurality of pieces of data on a 1-on-1 basis;
a second control step of controlling any arbitrary number of control states at the first control steps; and
a third control step of controlling a control state of any arbitrary range at the second control step.

A presentation medium according to another aspect of the present invention is characterized in that the medium is used for presenting a program for making an information processing apparatus carry out processing including:
a first control step of controlling a plurality of pieces of data on a 1-on-1 basis;
a second control step of controlling any arbitrary number of control states at the first control steps; and
a third control step of controlling a control state of any arbitrary range at the second control step.

A recording medium used for recording data and control information for controlling the data according to another aspect of the present invention is characterised in that the control information including:
a first control means for controlling a plurality of pieces of data on a 1-on-1 basis;
a second control means for controlling any arbitrary number of the control first control means;
and a third control means for controlling any arbitrary range in the second control means.

In the information processing apparatus according to another aspect of the present invention, a plurality of pieces of data are controlled by first control means on a 1-on-1 basis and any arbitrary number of first control means are controlled by a second control means, any arbitrary range in which is controlled by a third control means.

In the information processing method according to another aspect of the present invention and the presentation medium according to the present invention, any arbitrary number of control states at first control steps are controlled at a second control step and a control state of any arbitrary range at the second control step is controlled at a third control step.

In the recording medium according to at least preferred embodiments of the present invention, as control information, first control means, a second control means and a third control means are recorded.

Embodiments of the invention will now be described, by way of example only, with reference to the accompanying drawings in which:
Fig. 1 is an explanatory diagram used for describing an organization of directories;
Fig. 2 is an explanatory diagram used for describing the structure of a VOLUME.TOC file;
Fig. 3 is an explanatory diagram used for describing the structure of volume_information ( ) ;
Fig. 4 is an explanatory diagram used for describing the structure of volume_attribute ( ) ;
Fig. 5 is an explanatory diagram used for describing the structure of resume ( );
Fig. 6 is an explanatory diagram used for describing the structure of volume_rating ( );
Fig. 7 is an explanatory diagram used for describing the structure of write_protect ( );
Fig. 8 is an explanatory diagram used for describing the structure of play_protect ( );
Fig. 9 is an explanatory diagram used for describing the structure of recording_timer ( );
Fig. 10 is an explanatory diagram used for describing the structure of text_block ( );
Fig. 11 is an explanatory diagram used for describing the structure of language_set ( );
Fig. 12 is an explanatory diagram used for describing the structure of text_item ( );
Fig. 13 is an explanatory diagram used for describing the structure of ALBUM.STR;
Fig. 14 is an explanatory diagram used for describing the structure of album ( );
Fig. 15 is an explanatory diagram used for describing the structure of TITLE_###.VDR;
Fig. 16 is an explanatory diagram used for describing the structure of title_info ( );
Fig. 17 is an explanatory diagram used for describing the structure of PROGRAM_$$$.PGI;
Fig. 18 is an explanatory diagram used for describing the structure of program ( );
Fig. 19 is an explanatory diagram used for describing the structure of play_list ( );
Fig. 20 is an explanatory diagram used for describing the structure of play_item ( );
Fig. 21 is an explanatory diagram used for describing the structure of CHUNKGROUP_###.CGIT;
Fig. 22 is an explanatory diagram used for describing the structure of chunk_connection_info ( );
Fig. 23 is an explanatory diagram used for describing the structure of chunk_arrangement_info ( );
Fig. 24 is an explanatory diagram used for describing the structure of CHUNK_%%%.ABST;
Fig. 25 is a block diagram showing a typical configuration of an optical-disc apparatus to which one embodiment of the present invention is applied;
Fig. 26 is an explanatory diagram used for describing an organization of directories;
Fig. 27 is an explanatory diagram used for describing a logical organization of directories;
Fig. 28 is an explanatory diagram used for describing an offset;
Fig. 29 is an explanatory diagram used for describing an organization of directories;
Fig. 30 is an explanatory diagram used for describing an organization of directories;
Fig. 31 is an explanatory diagram used for describing a logical organization of directories;
Fig. 32 is an explanatory diagram used for describing an organization of directories;
Fig. 33 is an explanatory diagram used for describing an organization of directories;
Fig. 34 is an explanatory diagram used for describing a logical organization of directories;
Fig. 35 is an explanatory diagram used for describing a logical organization of directories;
Fig. 36 is an explanatory diagram used for describing file_type_id;
Fig. 37 is an explanatory diagram used for describing mark_type;
Fig. 38 is an explanatory diagram used for describing a chunk group;
Fig. 39 is an explanatory diagram used for describing a chunk group;
Fig. 40 is an explanatory diagram used for describing file_type_id;
Fig. 41 is an explanatory diagram used for describing chunk_sync_play_flag;
Fig. 42 is an explanatory diagram used for describing original_time_count_type;
Fig. 43 is an explanatory diagram used for describing file_type_id;
Fig. 44 is an explanatory diagram used for describing info_type;
Fig. 45 is an explanatory diagram used for describing slot_unit_type;
Fig. 46 is an explanatory diagram used for describing file_type_id;
Fig. 47 is an explanatory diagram used for describing program_status;
Fig. 48 shows a flowchart used for explaining processing to split a title;
Fig. 49 is an explanatory diagram used for describing hierarchical layers of a program, titles, chunk groups, chunks and streams;
Fig. 50 shows a flowchart used for explaining processing to swap titles;
Fig. 51 is an explanatory diagram used for describing hierarchical layers of a program, titles, chunk groups, chunks and streams;
Fig. 52 shows a flowchart used for explaining processing to delete a title;
Fig. 53 is an explanatory diagram used for describing processing to delete a title;
Fig. 54 shows a flowchart used for explaining processing to merge titles;
Fig. 55 shows a flowchart used for explaining processing to set up an operation to play back a program;
Fig. 56 is an explanatory diagram used for describing hierarchical layers of a program, titles, chunk groups, chunks and streams;
Fig. 57 shows a flowchart used for explaining processing to play back a program;
Fig. 58 is an explanatory diagram used for describing the configuration of a program;
Fig. 59 is an explanatory diagram used for describing the configuration of a play sequence; and
Fig. 60 is an explanatory diagram used for describing relations among a program, play sequences and play items.

Before embodiments of the present invention are described, each means cited in claims of the patent in the specification is exemplified by a typical implementation appended after the means by enclosing the implementation in parentheses in the following description of characteristics of the present invention in order to clarify a relation associating the means with the implementation. It is needless to say, however, that the appended implementation is not to intended to be construed in a limiting sense, that is, examples of the means are not limited to the appended implementation.

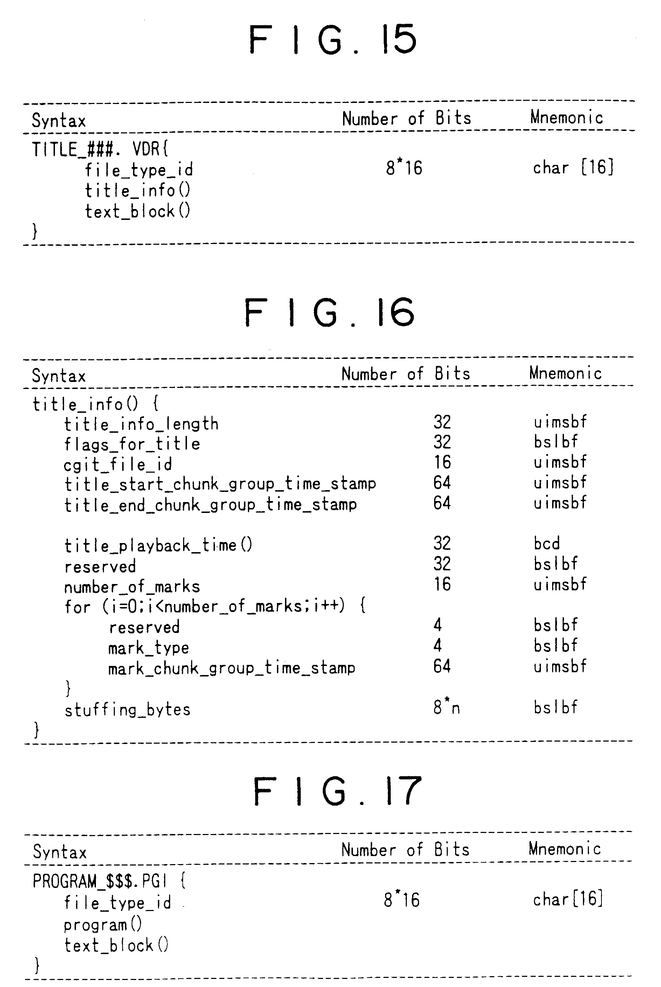

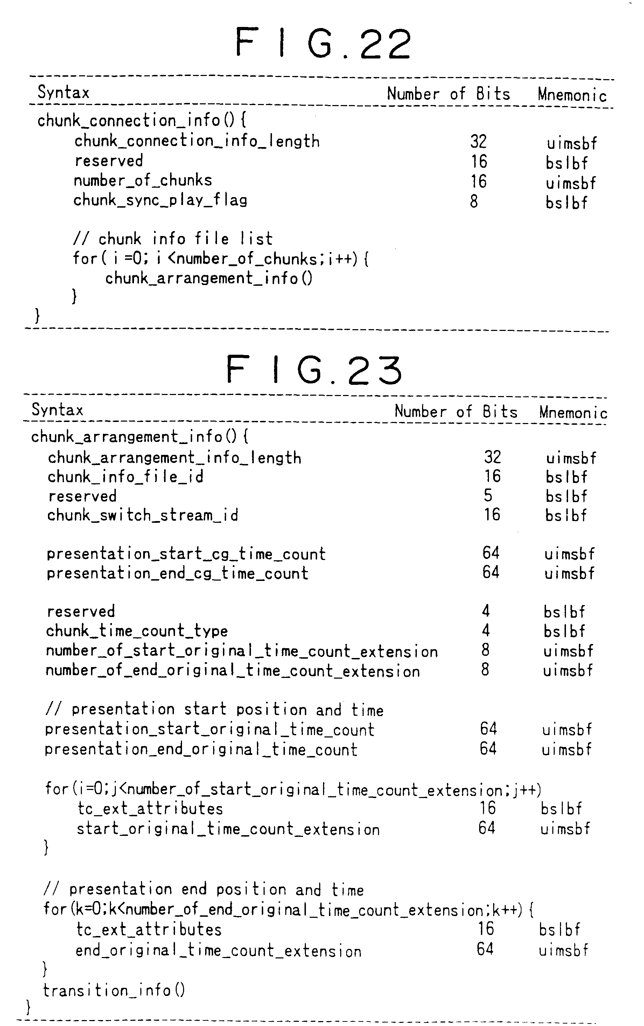

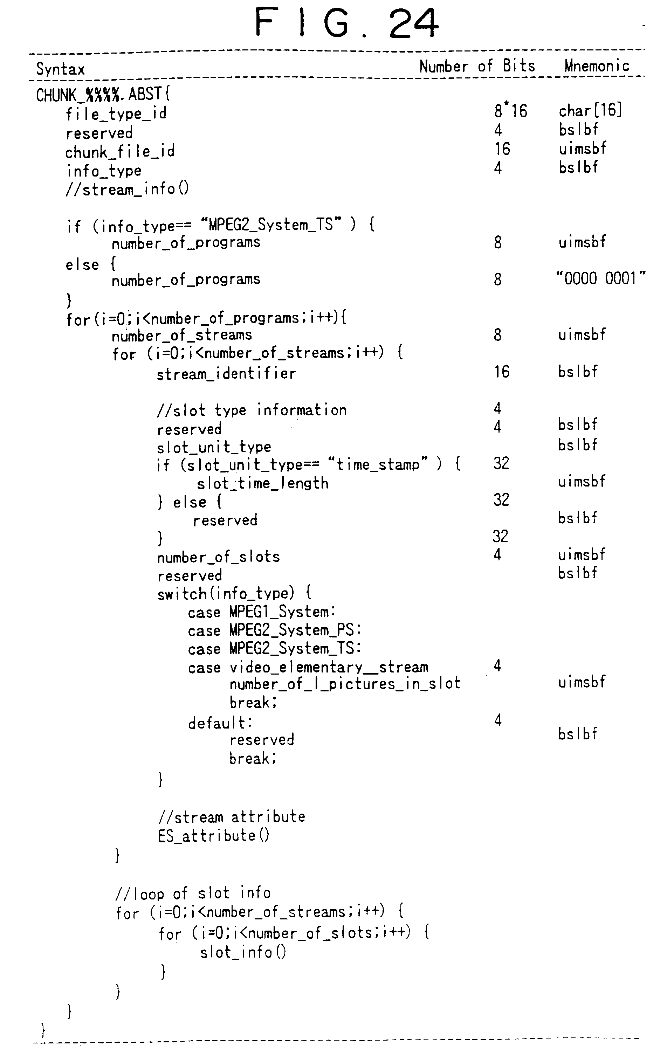

An information processing apparatus according to at least a preferred embodiment is characterized in that the apparatus comprises:
a first control means (implemented typically by CHUNK_%%%%. ABST shown in Fig. 24) for controlling a plurality of pieces of data on a 1-on-1 basis;
a second control means (implemented typically by CHUNKGROUP_###.CGIT shown in Fig. 21) for controlling any arbitrary number of the first control means; and
a third control means (implemented typically by TITLE_###.VDR shown in Fig. 15) for controlling any arbitrary range in the second control means.

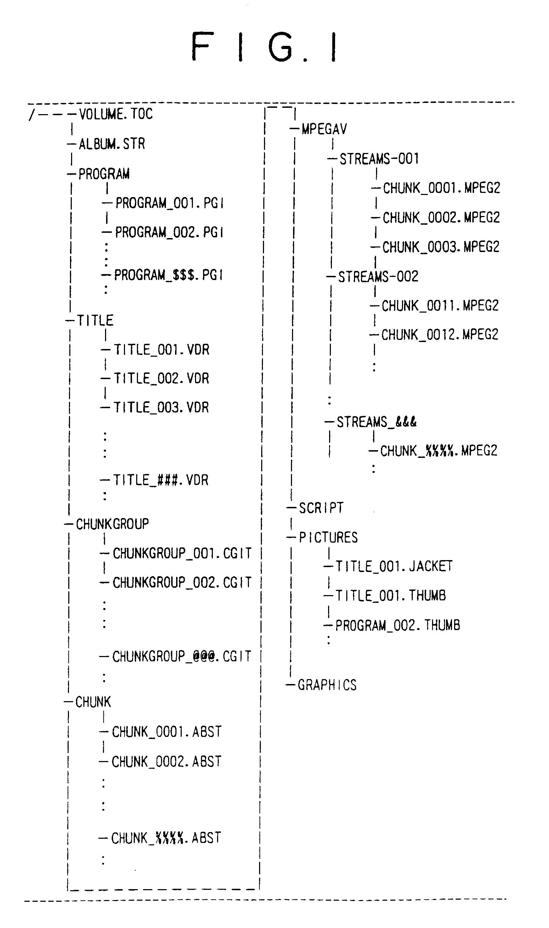

The description begins with an explanation of a layout of files on a recording medium provided by the present invention, which information is recorded into and played back from. Recorded on the recording medium, files shown in Fig. 1 are classified into 7 types listed below.
VOLUME.TOC
ALBUM.STR
PROGRAM_$$$.PGI
TITLE_###.VDR
CHUNKGROUP_@@@.CGIT
CHUNK_%%%%.ABST
CHUNK_%%%%.MPEG2

The VOLUME.TOC and ALBUM.STR files are placed in a root directory. A directory named "PROGRAM" is placed immediately below the root directory. The PROGRAM directory includes PROGRAM_$$$.PGI files where notation $$$ represents the number of a program. By the same token, a directory named TITLE is placed immediately below the root directory. The TITLE directory includes TITLE_###.VDR files where notation ### represent the number of a title. Placed immediately below the root directory, a CHUNKGROUP directory includes CHUNKGROUP_@@@.CGIT files where notation @@@ represents the number of a chunk group and a CHUNK directory includes CHUNK_%%%%.ABST files where notation %%%% represents the number of a chunk.

Also placed immediately below the root directory, an MPEGAV directory contains a plurality of sub-directories which each include CHUNK_%%%%.MPEG2 files where %%%% represents the number of a chunk.

Normally, one VOLUME.TOC file exists in the recording medium. In a recording medium with a special structure such as a recording medium with a ROM and RAM hybrid structure, however, a plurality of VOLUME.TOC files may exist. This VOLUME.TOC file is used for showing the property of the recording medium as a whole.

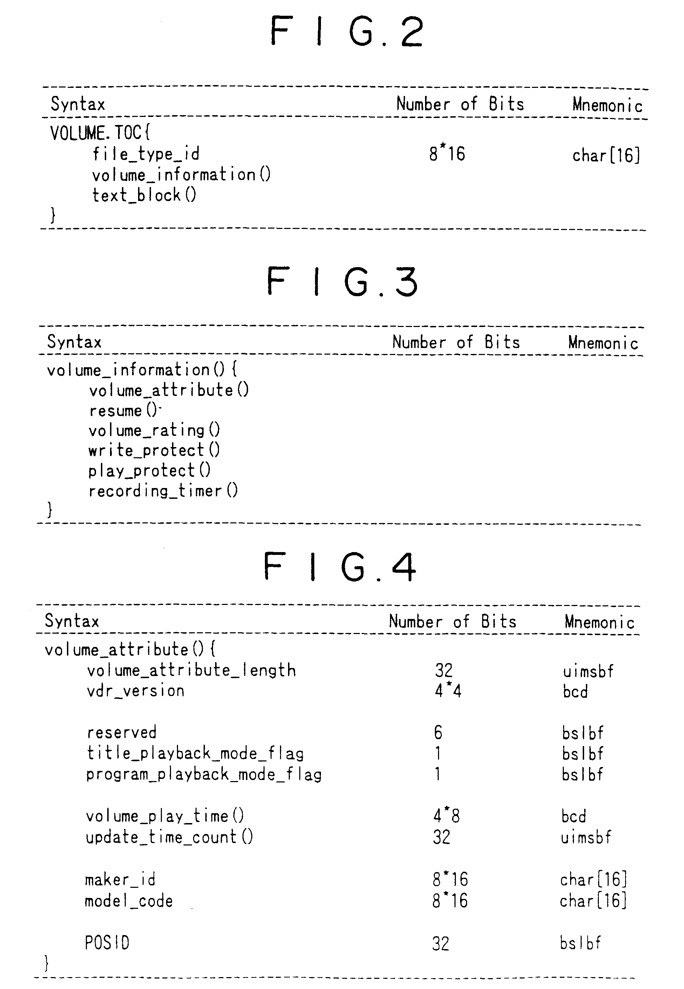

Fig. 2 is a diagram showing the structure of the VOLUME.TOC file. As shown in the figure, file_type_id is placed at the head of the file to indicate that the file is a VOLUME.TOC file. file_type_id is followed by volume_information ( ) which is finally followed by text_block ( ).

Fig. 3 is a diagram showing the structure of volume_information ( ). As shown in the figure, volume_information ( ) comprises volume_attribute ( ), resume ( ), volume_rating ( ), write_protect ( ), play_protect ( ) and recording_timer ( ).

volume_attribute ( ) is an area used for recording attributes of the logical volume. Fig. 4 is a diagram showing a detailed structure of volume_attribute ( ). As shown in the figure, volume_attribute ( ) includes title_playback_mode_flag and program_playback_mode_flag.

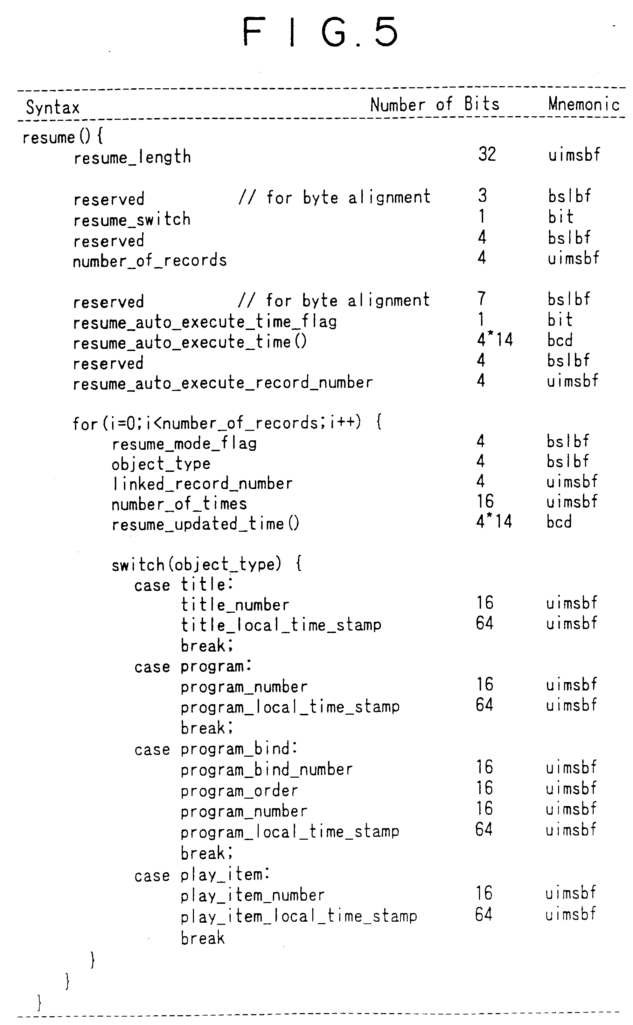

resume ( ) is an area used for recording information used in restoration of a state immediately prior to an eject operation at the time the recording medium is reinserted. Fig. 5 is a diagram showing a detailed structure of resume ( ).

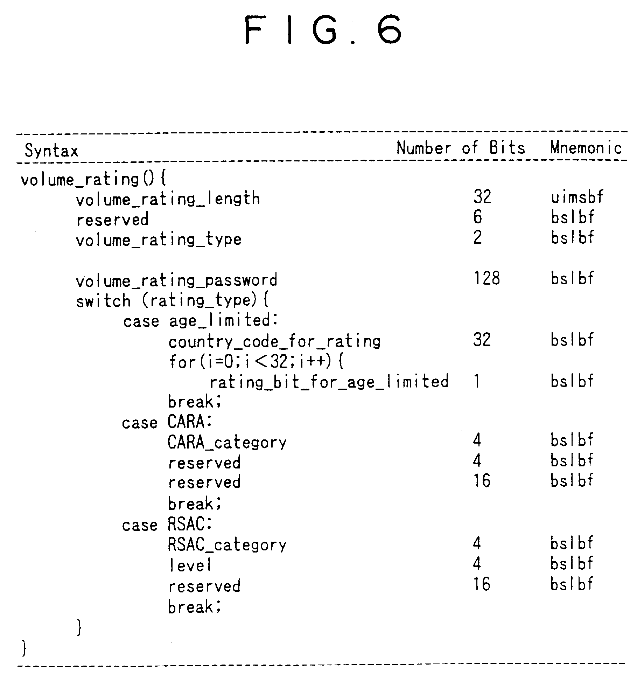

volume_rating ( ) shown in Fig. 3 is an area used for recording information used in implementation of age limitation of watchers/listeners of the volume as a whole in accordance with user ages and user categories. Fig. 6 is a diagram showing a detailed structure of volume_rating ( ).

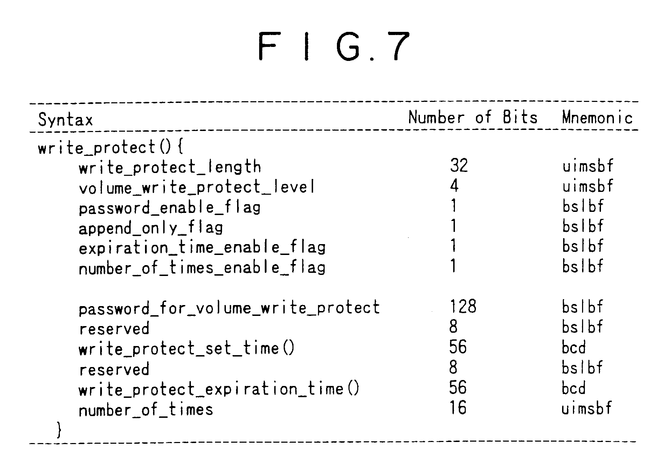

write_protect ( ) shown in Fig. 3 is an area used for recording information used in limitation of operations to change and delete a title or a program. Fig. 7 is a diagram showing a detailed structure of write_protect ( ).

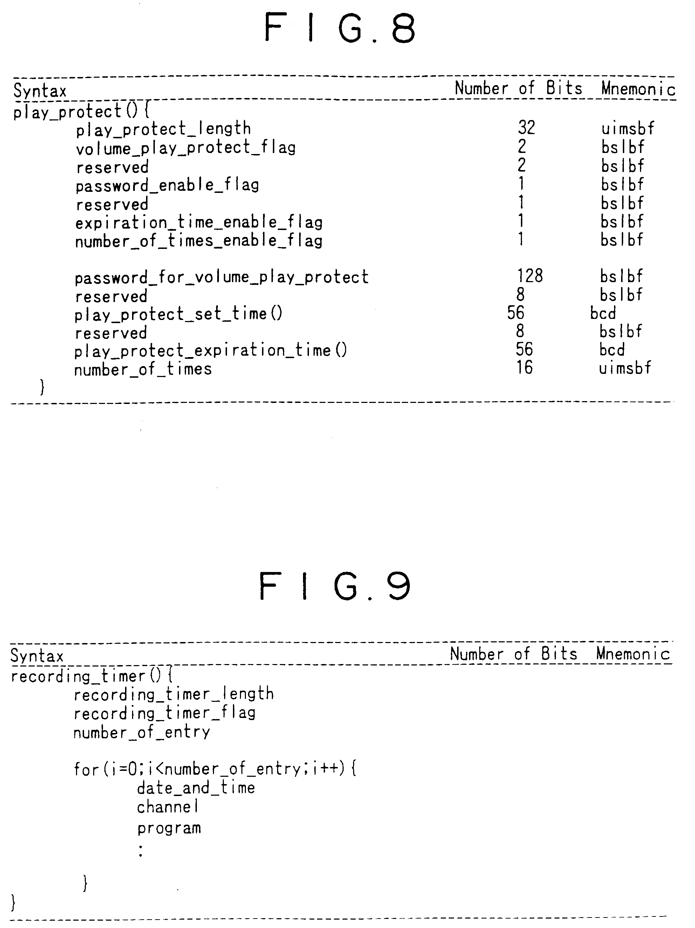

play_protect ( ) shown in Fig. 3 is an area used for recording information setting a playback enable function or a playback disable function and limiting the number of playback operations for a title or a program recorded in the volume. Fig. 8 is a diagram showing a detailed structure of play_protect ( ).

recording_timer ( ) shown in Fig. 3 is an area used for recording information controlling a recording time. Fig. 9 is a diagram showing a detailed structure of recording_timer ( ).

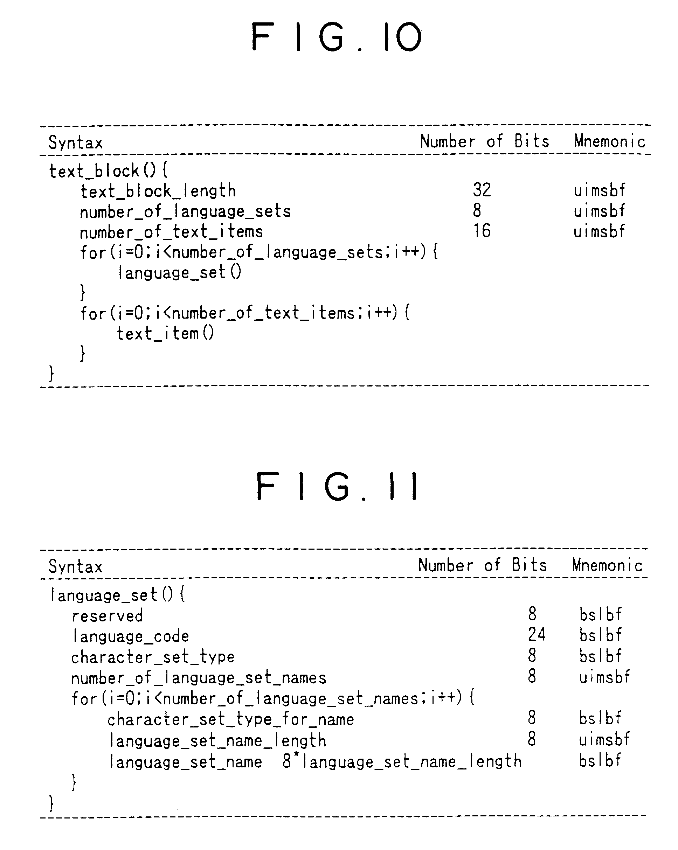

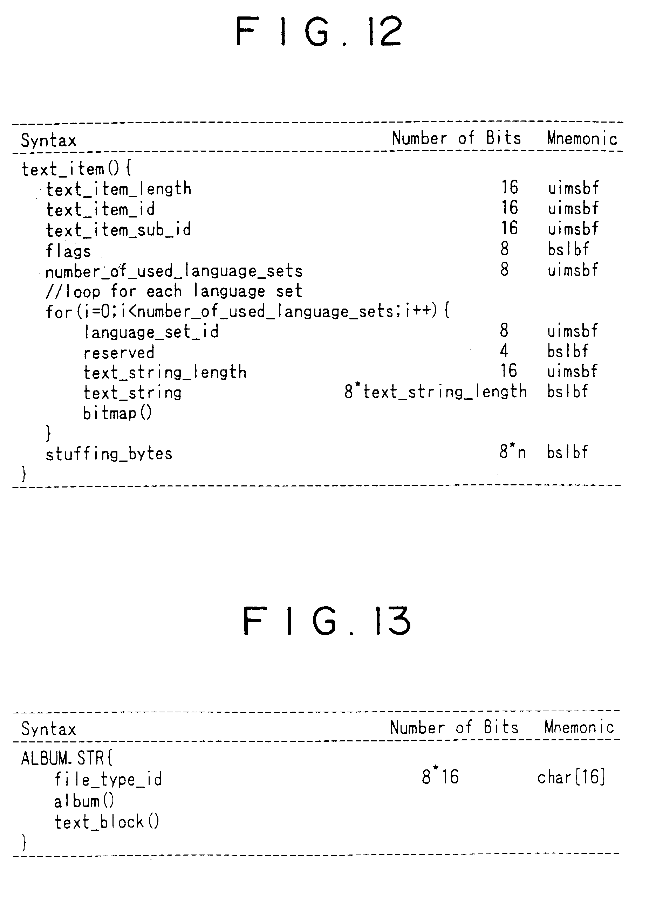

Fig. 10 is a diagram showing a detailed structure of text_block ( ) of the VOLUME.TOC file shown in Fig. 2. As shown in Fig. 10, text_block ( ) includes language_sets ( ) and text_items ( ). Figs. 11 and 12 show detailed structures of language_set ( ) and text_item ( ) respectively.

Normally, one ALBUM.STR file shown in Fig. 1 exists in a recording medium. In a recording medium with a special structure such as a recording medium with a ROM and RAM hybrid structure, however, a plurality of ALBUM.STR files may exist. The ALBUM.STR file is used for combining a plurality of recording media into a configuration that makes the recording media appear as if there were only a single recording medium.

Fig. 13 is a diagram showing the structure of the ALBUM.STR file. As shown in the figure, file_type_id is placed at the head of the file to indicate that the file is ALBUM.STR. file_type_id is followed by album ( ) which is finally followed by text_block ( ).

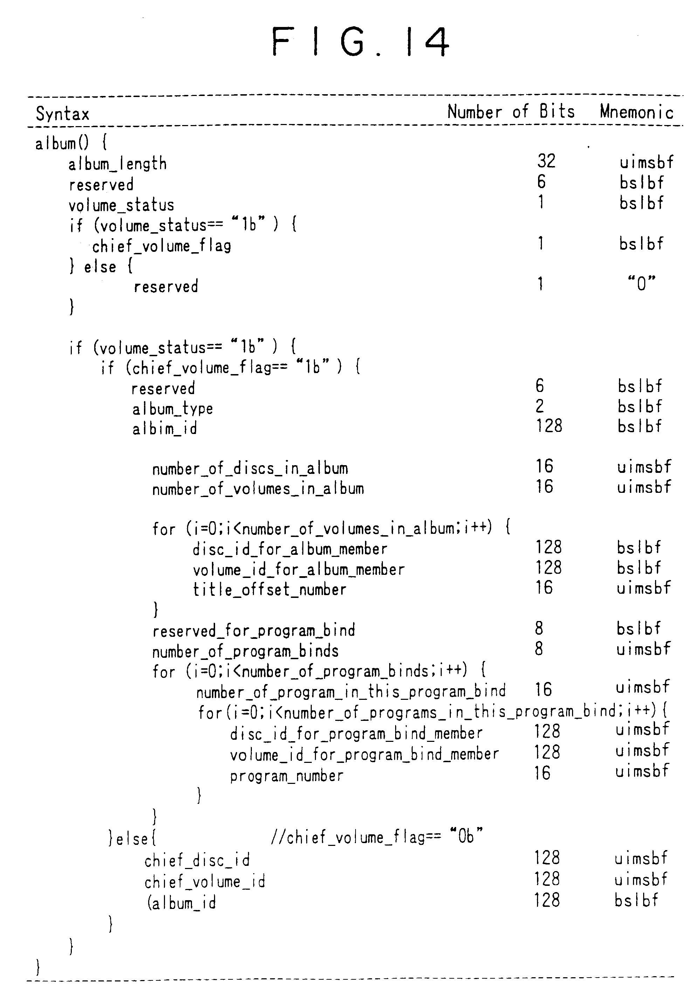

album ( ) is an area used for recording information used in handling a plurality of volumes, that is, a plurality of recording media, as one integrated volume. Fig. 14 is a diagram showing a detailed structure of album ( ).

As many TITLE_###.VDR files shown in Fig. 1 as titles exist. A title refers to, for example, a musical selection in the case of a compact disc or a program in the case of a television broadcasting. Fig. 15 is a diagram showing the structure of a TITLE_###.VDR file. As shown in the figure, file_type_id is placed at the head of the file to indicate that the file is TITLE_###.VDR. file_type_id is followed by title_info ( ) which is finally followed by text_block ( ). Notation ### is a string of characters representing the number of a title.

title_info ( ) is an area used for recording a start point and an end point of the title on a chunk group and other attributes of the title. Fig. 16 is a diagram showing a detailed structure of title_info ( ).

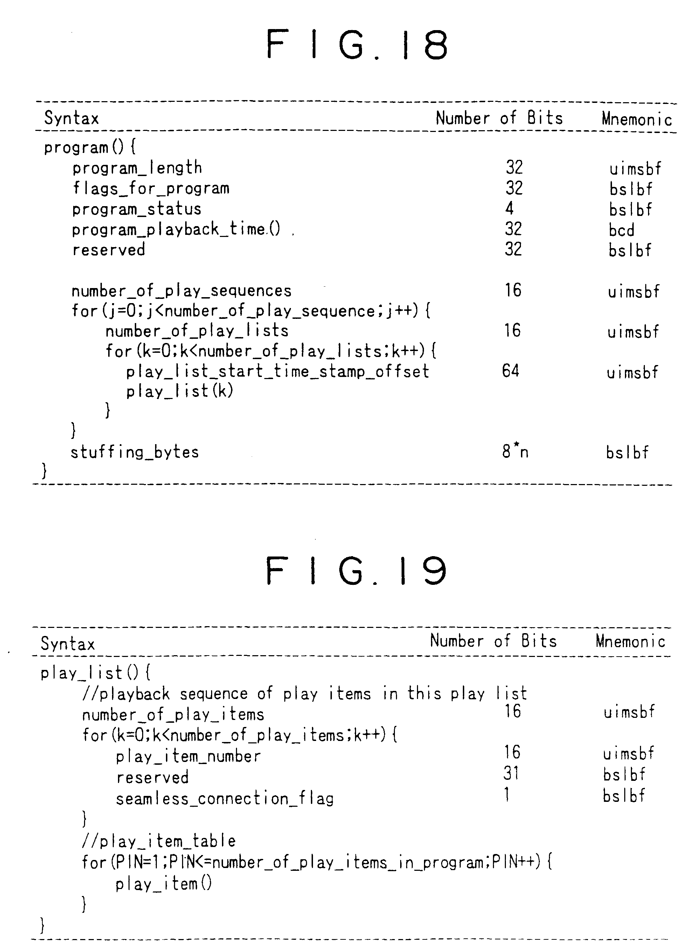

As many PROGRAM_$$$.PGI files shown in Fig. 1 as programs exist. A program comprises a plurality of cuts each specifying an area of a portion or all of a title. Cuts of a program are played back in a specified order. Fig. 17 is a diagram showing the structure of a PROGRAM_$$$.PGI file. As shown in the figure, file_type_id is placed at the head of the file to indicate that the file is PROGRAM_$$$.PGI. file_type_id is followed by program ( ) which is finally followed by text_block ( ). Notation $$$ is a string of characters representing the number of a program.

program ( ) is an area used for recording information required in an operation to collect necessary portions of titles and play back them without accomplishing irreversible editing of materials. Fig. 18 is a diagram showing a detailed structure of program ( ).

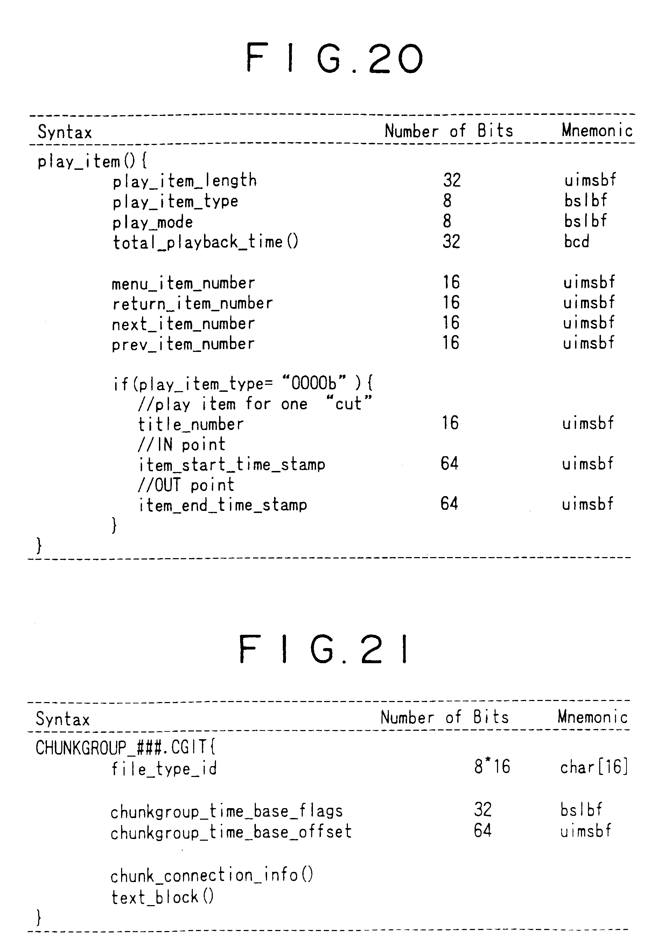

program ( ) shown in Fig. 18 has one play_list. Fig. 19 is a diagram showing details of play_list ( ).

A plurality of play_items ( ) are placed in play_list. Fig. 20 is a diagram showing details of play_item ( ).

As many CHUNKGROUP_@@@.CGIT files shown in Fig. 1 as many chunk groups exist. A chunk group is a data structure used for arranging a bit stream. When the user normally operates an apparatus for recording and playing back information into and from a recording medium such as a VDR (Video Disc Recorder), the user is not aware of the existence of this file.

Fig. 21 is a diagram showing a CHUNKGROUP_@@@.CGIT file. As shown in the figure, file_type_id is placed at the head of the file to indicate that the file is CHUNKGROUP_@@@.CGIT. file_type_id is followed by chunkgroup_time_base_flags and chunkgroup_time_base_offset which are followed by chunk_connection_info ( ). Finally, chunk_connection_info ( ) is followed by text_block ( ).

chunkgroup_time_base_flags are flags each associated with a reference counter of a chunk group. chunkgroup_time_base_offset shows a start time of a reference time axis of a chunk group. chunkgroup_time_base_offset is a 32-bit value set in a counter which counts up at a frequency of 90kHz. chunk_connection_info ( ) is an area used for recording peculiar information such as a video switch-over point, and video and audio synchronization. Fig. 22 is a diagram showing a detailed structure of chunk_connection_info ( ).

chunk_connection_info ( ) includes as many loops of chunk_arrangement_info ( ) as chunks pertaining to a chunk group. Fig. 23 is a diagram showing details of chunk_arrangement_info ( ).

As many CHUNK_%%%%.ABST files shown in Fig. 1 as many chunks exist. A chunk is information file for a stream file. Fig. 24 is a diagram showing the structure of a CHUNK_%%%%.ABST file. As shown in the figure, file_type_id is placed at the head of the file to indicate that the file is CHUNK_%%%%.ABST.

The CHUNK_%%%%.MPEG2 file shown in Fig. 1 is a stream file. Unlike other files which are generally used for storing information only, this file is used for storing an MPEG bit stream.

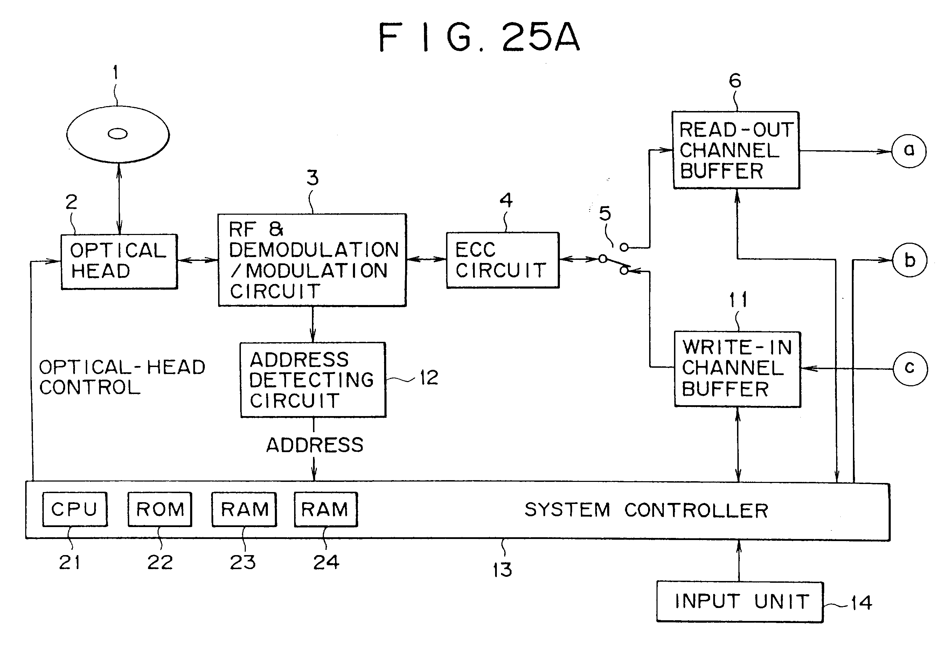

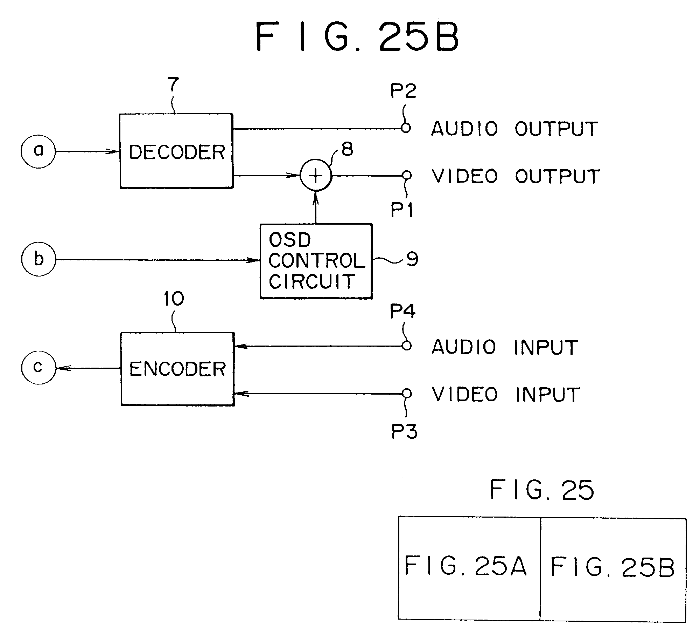

Fig. 25 is a diagram showing a typical configuration of an optical-disc apparatus for recording and playing back information into and from an optical disc used as a recording medium including the files described above. In the optical-disc apparatus, a single optical head 2 is provided for a rewritable optical disc 1. The optical head 2 is used for both reading out and writing information from and into the optical disc 1.

After being demodulated in an RF & demodulation/modulation circuit 3, a bit stream read out by the optical head 2 from the optical disc 1 is subjected to error correction in an ECC circuit 4 before being supplied to a read-out channel buffer 6 for absorbing a difference between a read-out rate and a decode-processing rate by way of a switch 5. An output of the read-out channel buffer 6 is supplied to a decoder 7. The read-out channel buffer 6 is designed so that a system controller 13 is capable of reading and writing the read-out channel buffer 6.

A bit stream output by the read-out channel buffer 6 is decoded by the decoder 7 which outputs video and audio signals as results of decoding. The video signal output by the decoder 7 is supplied to a synthesis circuit 8 to be synthesized therein with a video signal generated by an OSD (On Screen Display) control circuit 9. A result of the synthesis is output through an output terminal P1 to a display unit be displayed on the display unit which is not shown in the figure. In the mean time, the audio signal generated by the decoder 7 is output to a speaker through an output terminal P2 to be played back in the speaker which is also not shown in the figure.

On the other hand, a video signal input from an input terminal P3 and an audio signal input from an input terminal P4 are encoded by an encoder 10 before being supplied to a write-in channel buffer 11 for absorbing a difference between an encode-processing rate and a write-in rate. The write-in channel buffer 11 is also designed so that the system controller 13 is capable of reading and writing the write-in channel buffer 11.

Data stored in the write-in channel buffer 11 is read out from the write-in channel buffer 11 and supplied to the ECC circuit 4 by way of the switch 5. In the ECC circuit 4, an error correction code is added to the data before the data is supplied to the RF & demodulation/modulation circuit 3 to be modulated thereby. A signal, strictly speaking, an RF signal, output by the RF & demodulation/modulation circuit 3 is recorded onto the optical disc 1 by the optical head 2.

An address detecting circuit 12 detects information on an address on a track on an optical disc 1 subjected to a recording or playback operation. The system controller 13 controls operations of components composing the optical-disc apparatus. The system controller 13 comprises a CPU 21 for executing various kinds of control, a ROM unit 22 for storing information such as processing programs to be executed by the CPU 21, a RAM unit 23 for temporarily storing information such as data obtained as a result in the course of processing carried out by the CPU 21 and a RAM unit 24 for storing a variety of information files to be recorded or played back into or from the optical disc 1. The CPU 21 finely adjusts the position of the optical head 2 on the basis of a result of detection output by the address detecting circuit 12. The CPU 21 also controls switching-over operations of the switch 5. Composed of a variety of switches and a variety of buttons, an input unit 14 is operated by the user for entering a variety of commands to the optical-disc apparatus.

Next, a basic operation to read in data from an information file is explained. In an operation to read in data from the VOLUME.TOC information file, for example, the CPU 21 employed in the system controller 13 first confirms the physical address at which the VOLUME.TOC file is recorded in the optical disc 1 and the length of the file by using a file-system operation instruction included in a processing program in advance. Then, the CPU 21 moves the optical head 2 to a read-out position on the basis of information on the address of the VOLUME.TOC file. Subsequently, the CPU 21 sets the optical head 2, the RF & demodulation/modulation circuit 3 and the ECC circuit 4 in a read-out mode and positions the switch 5 on the side of the read-out channel buffer 6. Furthermore, the CPU 21 finely adjusts the position of the optical head 2 before starting a read-out operation by using the optical head 2. In the read-out operation, contents of the VOLUME.TOC file are read out by the optical head 2 and demodulated by the RF & demodulation/modulation circuit 3. The output of the RF & demodulation/modulation circuit 3 is subjected to error correction in the ECC 4 before being stored in the read-out channel buffer 6.

When the amount of data stored in the read-out channel buffer 6 becomes equal to or exceeds the size of the VOLUME.TOC file, the CPU 21 halts the read-out operation. Later on, the CPU 21 reads out the data stored in the read-out channel buffer 6 and stores the data in the RAM unit 24.

Next, a basic operation to write data into an information file is explained by taking the VOLUME.TOC information file as an example. First of all, the CPU 21 searches the file system, that is, the optical disc 1, for a free area having a size equal to or larger than a VOLUME.TOC file, into which data is to be written, and confirms the address of the free area by using a file-system operation instruction included in a processing program in advance.

Then, the CPU 21 transfers the VOLUME.TOC file prepared in the RAM unit 24 and to be newly written into the optical disc 1 to the write-in channel buffer 11. The CPU 21 then moves the optical head 2 to a write-in position on the basis of information on the address of the VOL UME.TOC file. Subsequently, the CPU 21 sets the optical head 2, the RF & demodulation/modulation circuit 3 and the ECC circuit 4 in a write-in mode and positions the switch 5 on the side of the write-in channel buffer 11. Furthermore, the CPU 21 finely adjusts the position of the optical head 2 before starting a write-in operation by using the optical head 2.

In the write-in operation, the newly prepared contents of the VOLUME.TOC file are read out from the write-in channel buffer 11 and supplied to the ECC circuit 4 by way of the switch 5. In the ECC circuit 4, an error correction code is added to the contents before modulation by the RF & demodulation/modulation circuit 3. A signal output by the RF & demodulation/modulation circuit 3 is recorded into the optical disc 1 by the optical head 2. When the amount of data read out from the write-in channel buffer 11 and recorded into the optical disc 1 becomes equal to or exceeds the size of the VOLUME.TOC file, the CPU 21 halts the write-in operation.

Finally, the CPU 21 rewrites a pointer pointing to the VOLUME.TOC file on the file system, that is, the optical disc 1, so as to make the pointer point to the newly written position by using a file-system operation instruction included in the processing program in advance.

Next, a basic operation to play back a stream is explained by taking a CHUNK_0001.MPEG2 file shown in Fig. 1 as an example. First of all, the CPU 21 employed in the system controller 13 confirms the physical address at which the CHUNK_0001.MPEG2 file is recorded in the optical disc 21 and the length of the file by using a file-system operation instruction included in a processing program in advance. Then, the CPU 21 moves the optical head 2 to a read-out position on the basis of information on the address of the CHUNK_0001.MPEG2 file. Subsequently, the CPU 21 sets the optical head 2, the RF & demodulation/modulation circuit 3 and the ECC circuit 4 in a read-out mode and positions the switch 5 on the side of the read-out channel buffer 6. Furthermore, the CPU 21 finely adjusts the position of the optical head 2 before starting a read-out operation by using the optical head 2.

In the read-out operation, contents of the CHUNK_0001.MPEG2 file read out by the optical head 2 are stored in the read-out channel buffer 6 through the RF & demodulation/modulation circuit 3, the ECC circuit 4 and the switch 5. The data stored in the read-out channel buffer 6 is output to the decoder 7 to be decoded by the decoder 7 which outputs video and audio signals as results of decoding. The audio signal generated by the decoder 7 is output to the output terminal P2. In the mean time, the video signal output by the decoder 7 is supplied to the output terminal P1 through the synthesis circuit 8.

When the amount of data read out from the optical disc 1 and decoded by the decoder 7 to be finally displayed becomes equal to the size of the CHUNK_0001.MPEG2 or when an instruction to halt the read-out operation is received from the input unit 14, the CPU 21 stops the read-out and decode processing.

Next, a basic operation to record a stream into an information file is explained by taking the CHUNK_000 1.MPEG2 information file as an example. First of all, the CPU 21 searches the file system, that is, the optical disc 1, for a free area having a size equal to or larger than the CHUNK_0001.MPEG2 file, into which a stream is to be written, and confirms the address of the free area by using a file-system operation instruction included in a processing program in advance.

A video signal input from the input terminal P3 and an audio signal input from the input terminal P4 are encoded by an encoder 10 before being supplied to the write-in channel buffer 11. The CPU 21 then moves the optical head 2 to a write-in position on the basis of information on the address of the CHUNK_0001.MPEG2 file. Subsequently, the CPU 21 sets the optical head 2, the RF & demodulation/modulation circuit 3 and the ECC circuit 4 in a write-in mode and positions the switch 5 on the side of the write-in channel buffer 11. Furthermore, the CPU 21 finely adjusts the position of the optical head 2 before starting a write-in operation by using the optical head 2. In the write-in operation, the newly prepared contents of the CHUNK_0001.MPEG2 file are read out from the write-in channel buffer 11 and supplied to optical head 2 by way of the switch 5, the ECC circuit 4 and the RF & demodulation/modulation circuit 3. A signal output by the RF & demodulation/modulation circuit 3 is recorded into the optical disc 1 by the optical head 2.

When the amount of data read out from the write-in channel buffer 11 and recorded into the optical disc 1 becomes equal to the size of the CHUNK_0001.MPEG2 or when an instruction to halt the write-in operation is received from the input unit 14, the CPU 21 stops the write-in processing. Finally, the CPU 21 rewrites a pointer pointing to the CHUNK_0001.MPEG2 file on the file system, that is, the optical disc 1, so as to make the pointer point to the newly written position by using a file-system operation instruction included in the processing program in advance.

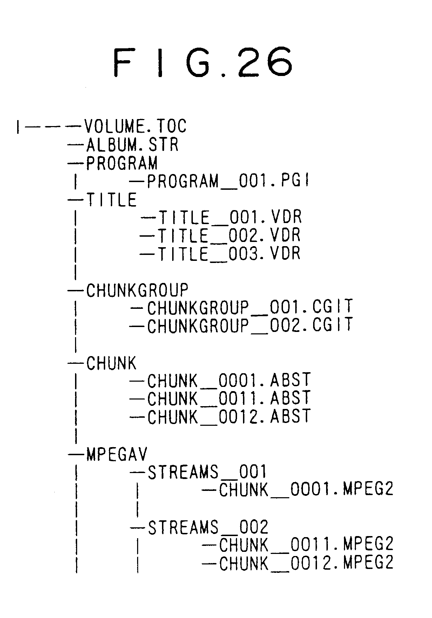

Assume that information and stream files shown in Fig. 26 have been recorded in the optical disc 1. In this example, the optical disc 1 includes a file named PROGRAM 001.PGI for storing a program. In addition, the optical disc 1 also includes three title files named TITLE_001.VDR, TITLE_002.VDR and TITLE_003.VDR respectively.

Furthermore, the optical disc 1 also includes two chunk-group information files named CHUNKGROUP_001.CGIT and CHUNKGROUP_002.CGIT. On the top of that, the optical disc 1 includes three stream files named CHUNK_0001.MPEG2, CHUNK_0011.MPEG2 and CHUNK_0012.MPEG2 as well as three information files named CHUNK_0001.ABST, CHUNK_0011.ABST and CHUNK_0012.ABST associated with the CHUNK_0001.MPEG2, CHUNK_0011.MPEG2 and CHUNK_0012.MPEG2 files respectively.

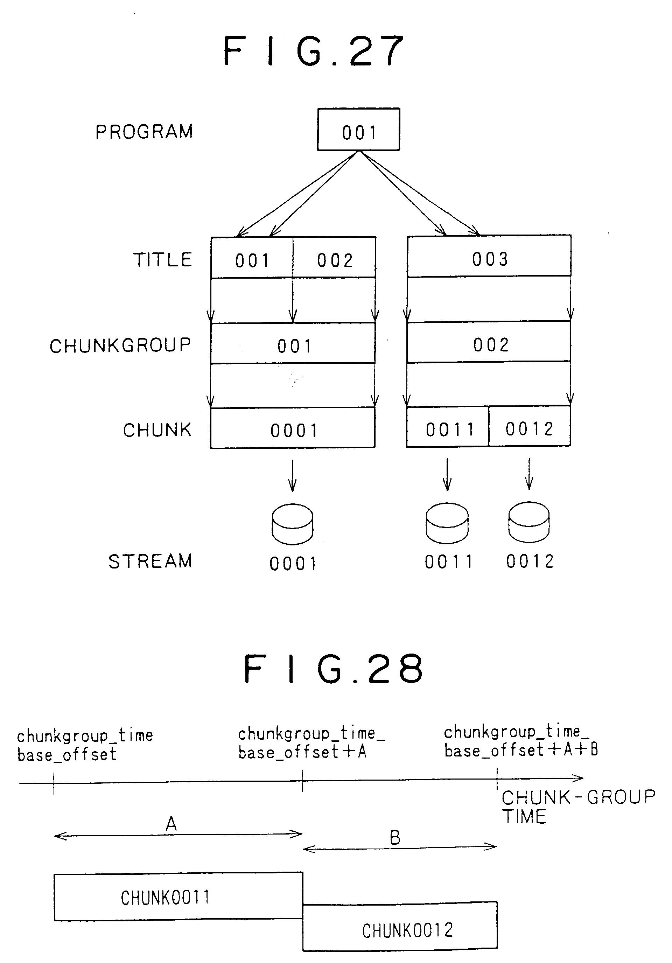

Fig. 27 is a diagram showing the logical structure of the optical disc 1 containing the information and stream files shown in Fig. 26. In this example, the chunk information files named CHUNK_0001.ABST, CHUNK_0011.ABST and CHUNK_0012.ABST specify the CHUNK_0001.MPEG2, CHUNK_0011.MPEG2 and CHUNK_0012.MPEG2 stream files respectively. To put it concretely, in a chunk_file_id field of each of the CHUNK_%%%%.ABST files shown in Fig. 24, the file ID of the associated stream file is specified.

In addition, in this example, the chunk-group information file named CHUNKGROUP_001.CGIT specifies the chunk information file named CHUNK_0001.ABST whereas the chunk-group information file named CHUNKGROUP_002.CGIT specifies the chunk information files named CHUNK_0011.ABST and CHUNK_0012.ABST. To put it concretely, in a chunk_info_file_id field of chunk_arrangement_info ( ) shown in Fig. 23, a file ID of chunk information is specified. This chunk_arrangement_info ( ) is included in a chunk group information file. As many chunk_arrangement_infos ( ) as chunks pertaining to a chunk group exist in the data structure. It should be noted that chunk_arrangement_info ( ) shown in Fig. 23 is described in chunk_connection_info ( ) shown in Fig. 22 and this chunk_connection_info is described in the CHUNKGROUP_ ###.CGIT file shown in Fig. 21.

There is only one chunk_arrangement_info ( ) in CHUNKGROUP_001. The chunk_info_file_id field of this chunk_arrangement_info ( ) specifies CHUNK_0001. On the other hand, there are two chunk_arrangement_infos ( ) in CHUNKGROUP_002. The chunk_info_file_id fields of these chunk_arrangement_infos ( ) specify CHUNK_0011 and CHUNK_0012 respectively. Thus, a chunk group can be used to specify an order in which a plurality of chunks are to be played back.

To put it concretely, first of all, an initial value of a timer for the chunk group is determined by chunkgroup_time_base_offset in the CHUNKGROUP_###.CGIT file shown in Fig. 21. Then, when each chunk is cataloged, presentation_start_cg_time_count and presentattion_end_cg_time_count of chunk_arrangement_info ( ) shown in Fig. 23 are specified.

For example, assume that the time lengths of CHUNK_0011 and CHUNK_0012 are A and B respectively as shown in Fig. 28. In this case, presentation_start_cg_count and presentattion_end_cg_count of CHUNK_0011 are equal to chunkgroup_time_base_offset and chunk_group_time_base_offset+A respectively. On the other hand, presentation_start_cg_count and presentattion_end_cg_count of CHUNK_0012 are equal to chunkgroup_time_base_offset+A and chunk_group_time_base_offset+A+B respectively. By setting the fields in this way, CHUNKGROUP_002 is defined so that CHUNK_0011 and CHUNK_0012 are played back continuously.

It should be noted that, if the playback time of CHUNK_0011 overlaps the playback time of CHUNK_0012, one of the playback times can be shifted to eliminate the overlapping. In addition, transition_info ( ) in chunk_arrangement_info ( ) shown in Fig. 23 is used as a descriptive field used for specifying a special effect such as a fade-in, a fade-out or a wipe in a transition from one stream to another one.

In the example shown in Fig. 26 (or Fig. 27), the TITLE_001.VDR and TITLE_002.VDR title information files specify the CHUNKGROUP_001.CGIT chunk-group information file whereas the TITLE_003.VDR title information file specifies the CHUNKGROUP_002.CGIT chunk-group information file. To put it concretely, a cgit_file_id field in title_info ( ) shown in Fig. 16 specifies the file ID of the chunk group. In addition, fields named title_start_chunk_group_time_stamp and title_end_chunk_group_time_stamp are used for specifying a time range in which the title is defined in the chunk group.

In the example shown in Fig. 27, for example, TITLE_001 and TITLE_002 specify the first and second halves of CHUNKGROUP 001. It should be noted that the division conforms to a request made by the user and its position is determined arbitrarily by the user instead of being determined in advance. In this example, let the position of division into TITLE_001 and TITLE_002 be set at a location separated away from the head of CHUNKGROUP_001 by a distance of A.

TITLE_001 specifies CHUNKGROUP_001 as a chunk group and a start time of CHUNKGROUP_001 as a start time of the title. As an end time of the title, a time of a point specified by the user is specified.

That is to say, as title_start_chunk_group_time_stamp of TITLE 001, chunkgroup_time_base_offset (the position of the head) of CHUNKGROUP_001 is set whereas, as title_end_chunk_group_time_stamp of TITLE_001, a sum of chunkgroup_time_base_offset of CHUNKGROUP_001 and the distance A is set.

TITLE_002 specifies CHUNKGROUP_001 as a chunk group and a time of a point specified by the user is specified a start time of the title. As an end time of the title, an end time of CHUNKGROUP_001 is specified.

That is to say, as title_start_chunk_group_time_stamp of TITLE_002, a sum of chunkgroup_time_base_offset (the position of the head) of CHUNKGROUP_001 and the distance A is set whereas, as title_end_chunk_group_time_stamp of TITLE_002, a sum of chunkgroup_time_base_offset of CHUNKGROUP_001 and the length of CHUNKGROUP_001 is set.

TITLE_003 specifies CHUNKGROUP_002 as a chunk group and a start time of CHUNKGROUP_002 is specified a start time of the title. As an end time of the title, an end time of CHUNKGROUP_002 is specified.

That is to say, as title_start_chunk_group_time_stamp of TITLE_003, chunkgroup_time_base_offset (the position of the head) of CHUNKGROUP_002 is set whereas, as title_end_chunk_group_time_stamp of TITLE_003, a sum of chunkgroup_time_base_offset of CHUNKGROUP_002 and the length of CHUNKGROUP_002 is set.

In addition, in this example, the program information file named PROGRAM_001.PGI specifies that part of TITLE_001 and part of TITLE_003 be played back in an order the parts are enumerated. To put it concretely, title_number in play_item ( ) shown in Fig. 20 is used for specifying a title. Times defined by a title are used for defining start and end points to extract a cut. A plurality of such cuts are gathered to compose a program.

The following is a description of an append-record operation to additionally record new information onto the optical disc 1. To put it concretely, this append-record operation is typically carried out as a video recording operation or carried out by the user by operating the input unit 14 to enter a command to perform video real-time recording to the optical-disc apparatus. In the latter case, a recording button is pressed if the video-recording end time is not known. A button for a one-touch recording function is pressed, however, for a case in which the recording end time can be predicted. The one-touch recording function is a function for carrying out video recording for a fixed period of time.

The append-record operation is explained by taking timer recording as an example. In this case, the user of the optical-disc apparatus specifies, among other things, a recording start time, a recording end time, the bit rate of a bit stream and a channel to be recorded in advance. In addition, at a point of time the video recording is reserved, the optical disc 1 is checked in advance to find out whether or not there is left a free space suited for the bit rate and the length of the recording time.

If another recording operation is carried out on the optical disc 1 between a time a reservation is made and a time to execute the reserved video recording, it is quite within the bounds of possibility that the confirmed free space for implementing the reserved video recording at the specified bit rate can not be allocated any more. In such a case, the CPU 21 either reduces the bit rate to a value smaller than the specified fore in order to record information for the reserved period of time, or records information for a period of time as long as possible by keeping the bit rate unchanged as it is. It is needless to say that the CPU 21 then carries out the recording operation further and, as an inconvenience for the reserved video recording is detected, a message informing the user of the inconvenience is issued.

As the start time of the reserved video recording is approaching, the CPU 21 uses an embedded timer and a clock signal to automatically restore the optical-disc apparatus to an operating mode from a sleep mode. Then, the CPU 21 issues a file-system operation instruction included in the processing program from the beginning to allocate an area used for recording a reserved program on the optical disc 1. That is to say, first of all, the CPU 21 subtracts the start time from the end time of the reserved recording to find the length of the recording time and, then, calculates a product of the length of the recording time and the bit rate to find the size of the necessary area to be allocated for recording the reserved program. In addition to a stream file required in the reserved recording, data may need to be stored in an information file. To be more specific, when a new title needs to be stored in a title information file, an area has to be allocated on the optical disc 1 for recording the title information file. If an area with a sufficient size can not be allocated, it is necessary to adopt the countermeasure technique described above, that is, reduction of the bit rate or carrying out a recording operation only for a period of time corresponding to the allocated area.

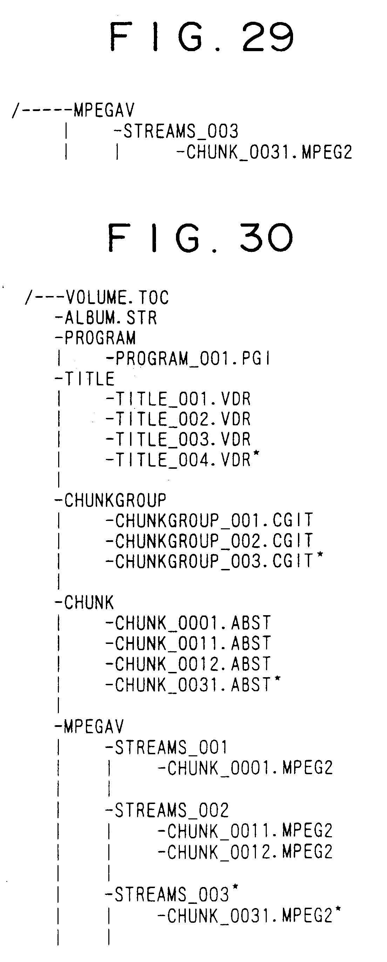

It should be noted that, since a new title is stored in this case, the user gives a name to a new stream file, strictly speaking, to a new stream file in a new stream directory. Let the name be ¥MPEGAV¥STREAM_003¥ CHUNK_0031. That is to say, the name of the stream file is CHUNK_0031.MPEG2 in the STREAM_003 directory under the MPEGAV directory in the root directory as shown in Fig. 29.

The CPU 21 issues instructions of execution in the recording mode to other components of the optical-disc apparatus. For example, a video signal received through the input terminal P3 and an audio signal through the input terminal P4 from a tuner not shown in the figure are encoded by the encoder 10 and then stored in a write-in channel buffer 11. Then, the CPU 21 moves the optical head 2 to a write position determined by information on an address of the area allocated earlier. The CPU 21 then sets the optical head 2, the RF & demodulation/modulation circuit 3 and the ECC circuit 4 in a write-in mode and positions the switch 5 on the side of the write-in channel buffer 11. After the position of the optical head 2 has been finely adjusted, a write-in operation using the optical head 2 is started. At that time, data to be recorded in a newly provided file named CHUNK_0031.MPEG2 is read out from the write-in channel buffer 11 to be recorded onto the optical disc 1 by way of the switch 5, the ECC circuit 4, the RF & demodulation/modulation circuit 3 and the optical head 2.

When one of the following events occurs during the write-in operation described above, the CPU 21 halts the operation.
1 The end time of the reserved video recording is reached.
2 Information can no longer be recorded onto the optical disc 1 due to a reason such as an insufficient storage capacity.
3 An instruction to stop the recording operation is received.

Next, by using a file-system operation instruction included in the processing program in advance, the CPU 21 updates a pointer pointing to CHUNK_0031.MPEG2 in the file system with a value pointing to a location at which information has been newly recorded. In addition, the CPU 21 prepares files respectively for chunk information, chunk-group information and title information, gives a name to each of the files and records the information into the files. It should be noted that free spaces for recording the files need to be allocated in advance on the optical disc 1 during the recording operation or at the reservation time.

As a result, new information files are created typically as shown in Fig. 30. In the figure, files names each with an asterisk mark '*' provided on the right side thereof are the names of the files newly created in the operation described above.

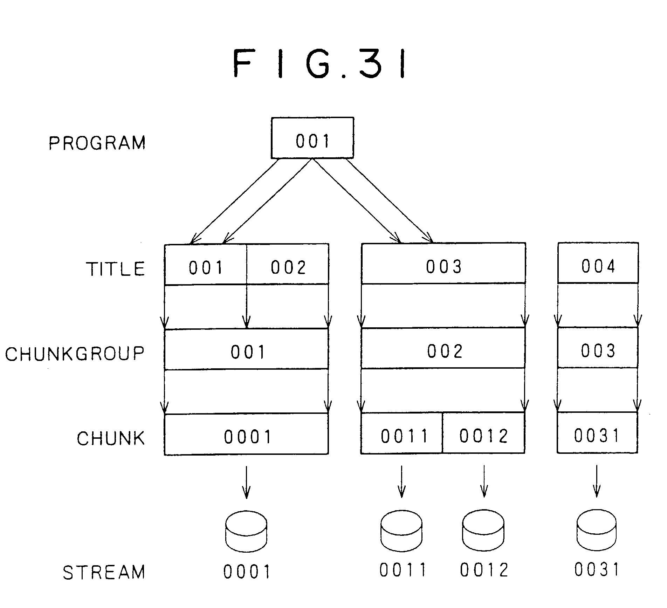

Fig. 31 is a diagram showing a relation among the newly created information files. As shown in the figure, TITLE_004 specifies CHUNKGROUP_003 specifying CHUNK_0031 which specifies STREAM_0031.

That is to say, a new stream is recorded in an information file as TITLE_004. By using a function of the optical-disc apparatus to verify a title, the user is capable of knowing information such as attributes of TITLE_004. In addition, TITLE_004 can be played back.

The following is a description of an operation to overwrite/record information on an optical disc 1 like one shown in Fig. 26 (or Fig. 27). Much like an operation to record a signal onto a video tape, an overwrite-record operation is an operation to record a new program over an existing program already recorded on the optical disc 1, erasing the existing program.

In the overwrite-record operation, a position to start the operation is important. Assume that the user specifies the head of TITLE_001 as a position to start an overwrite-record operation. In this case, the overwrite-record operation is carried out by overwriting existing information recorded in TITLE_001, TITLE_002 and TITLE_003 in an order they are enumerated. If the overwrite-record operation has not been finished even if the end of TITLE_003 is reached, the recording operation is continued by allocating a new free area on the optical disc 1. If TITLE_002 is specified as a location to start an overwrite-record operation, information in TITLE_001 will not be overwritten by the recording operation because TITLE_001 precedes the start location of the operation.

Assume that timer video recording is carried out by overwriting existing information starting with that at the head of TITLE_003. In this case, the user of the optical-disc apparatus specifies, among other things, a recording start time, a recording end time, the bit rate of a bit stream and a channel to be recorded in advance. In addition, the head of TITLE_003 is specified as a recording start location which is of importance to the overwrite-record operation. Furthermore, also in this case, at a point of time the video recording is reserved, the existence of a space suited for the bit rate and the video recording time on the optical disc 1 is verified in advance. In the case of an overwrite-record operation, a sum of the total size of a plurality of rewritable titles starting from a specified location and free areas on the optical disc 1 is a recordable space. To be more specific, in this case, a sum of the total size of STREAM_0011 and STREAM_0012 streams controlled by TITLE_003 and a free area on the optical disc 1 is a recordable space.

In a overwrite-record operation, for the recordable space described above, there are some items available for selection as to what order the video recording is to be actually carried out. As a first conceivable item of selection, it is possible to select a technique to record information in an order streams are specified in the title. To be more specific, in this case, it is possible to select a technique wherein the video recording is started from the head of STREAM_0011 and, as the end of STREAM_0011 is reached, the recording is continued to the head of STREAM_0012. Then, as the end of STREAM_0012 is reached, the video recording is continued to the free space on the optical disc 1. As another technique, first of all, the video recording is carried out on the free area on the optical disc 1 and, at a point of time the free area is all used up, the recording is continued to an existing stream.

The former technique is excellent in a sense that the technique emulates a video tape. That is to say, since the recording operation resembles an operation to record information onto a video tape, the operation is characterized in that the user is capable of comprehending the operation with ease. On the other hand, characterized in that an already recorded stream is erased later, the latter technique is excellent in a sense that recorded information is protected.

It should be noted that, if another recording operation is carried out on the optical disc 1 between a time a reservation is made and a time to execute the reserved video recording, it is quite within the bounds of possibility that the confirmed free space for implementing the reserved video recording at the specified bit rate can not be allocated any more. In such a case, much like the append-record operation described earlier, the CPU 21 either automatically reduces the bit rate to a value smaller than the specified fore in order to record information for the reserved period of time, or records information for a period of time as long as possible by keeping the bit rate unchanged as it is.

As the start time of the reserved video recording is approaching, the optical-disc apparatus is restored from a sleep mode to an operating mode. The CPU 21 allocates all free areas on the optical disc 1. It is needless to say that there is also a method whereby a free area is not allocated at this point of time but allocated at a point of time such an area is required. For the sake of explanation simplicity, a required area is allocated prior to the start of recording.

It should be noted that since the size of a required area is known in advance in timer recording due to the fact that a start time, an end time and a bit rate are specified, only an area with a required size or a required size plus a certain additional margin can be allocated. In case it is necessary to record information files such as a case in which a title information file to be recorded as a new title is required during recording, however, an area with a size sufficient for recording the information files needs to be allocated.

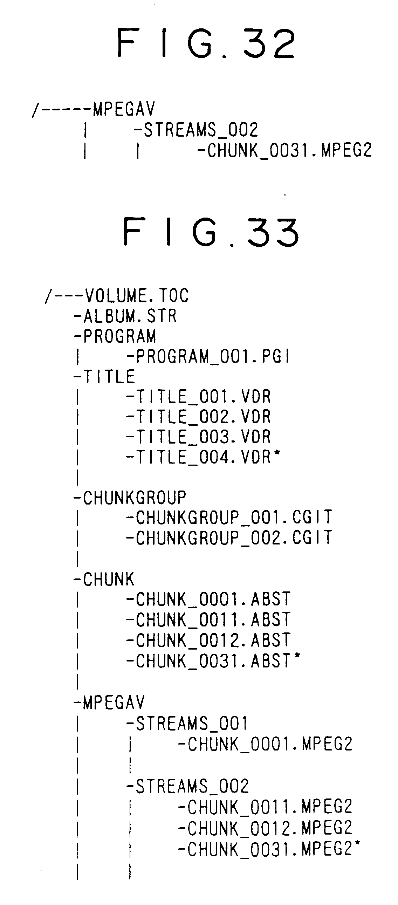

A name is given to a new stream file, strictly speaking, a new stream file in a new stream directory. Let the name be ¥MPEGAV¥STREAM_002¥CHUNK_0031. That is to say, the name of the stream file is CHUNK_0031.MPEG2 in the STREAM_002 directory under the MPEGAV directory in the root directory as shown in Fig. 32.

A video signal received through the input terminal P3 and an audio signal through the input terminal P4 from a tuner not shown in the figure are encoded by the encoder 10 and then stored in a write-in channel buffer 11. Then, the CPU 21 moves the optical head 2 to a write position determined by information on an address of the area allocated earlier. The CPU 21 then sets the optical head 2, the RF & demodulation/modulation circuit 3 and the ECC circuit 4 in a write-in mode and positions the switch 5 on the side of the write-in channel buffer 11. After the position of the optical head 2 has been finely adjusted, a write-in operation using the optical head 2 is started. At that time, data to be recorded in a newly provided file named CHUNK_0031.MPEG2 is read out from the write-in channel buffer 11 to be recorded onto the optical disc 1 by way of the switch 5, the ECC circuit 4, the RF & demodulation/modulation circuit 3 and the optical head 2.

At that time, first of all, the stream file named CHUNK_0011.MPEG2 is rewritten. After the recording has reached the end of the stream file named CHUNK_0011.MPEG2, then, the operation is continued to a stream file named CHUNK_0012.MPEG2 prior to continuation to a stream file named CHUNK_0031.MPEG2.

While the processing described above is being carried out, the CPU 21 halts the write-in operation at a point of time any one of the 3 conditions described earlier is met.

Then, the CPU 21 executes a file-system operation instruction included in the processing program in advance to update the stream files, chunk information, chunk-group information and title information.

By the way, the configuration of files is changed with timing synchronized to completion of the write-in operation. For example, when recording is carried out on the stream file named CHUNK_0031.MPEG2 after the write-in operations of the 2 stream files named CHUNK_0011.MPEG2 andCHUNK_0012.MPEG2 have been completed, the configuration of files on the optical disc 1 is changed to one shown in Fig. 33. A file name with an asterisk mark '*' appended on the right side thereof is the name of a file newly created this time.

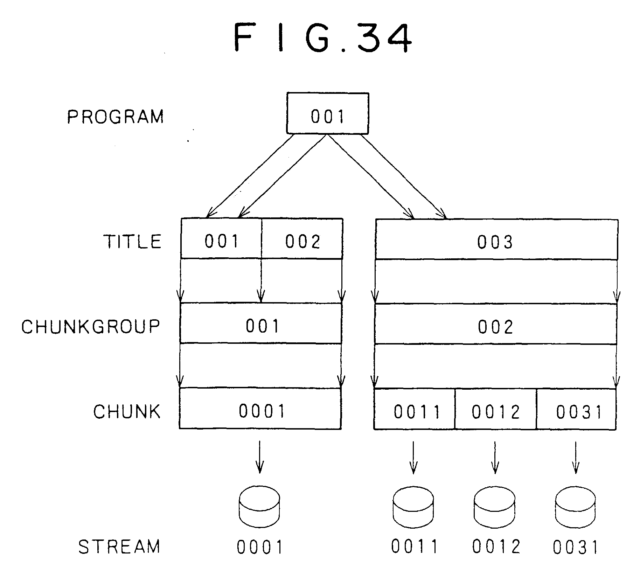

Fig. 34 is a diagram showing a relation of files newly created in this way, that is, files shown in Fig. 33. When compared with that shown in Fig. 31, it is obvious that CHUNK_0031 is added as a chunk included in CHUNKGROUP_002 specified by TITLE_003 and CHUNK_0031 specifies STREAM_0031.

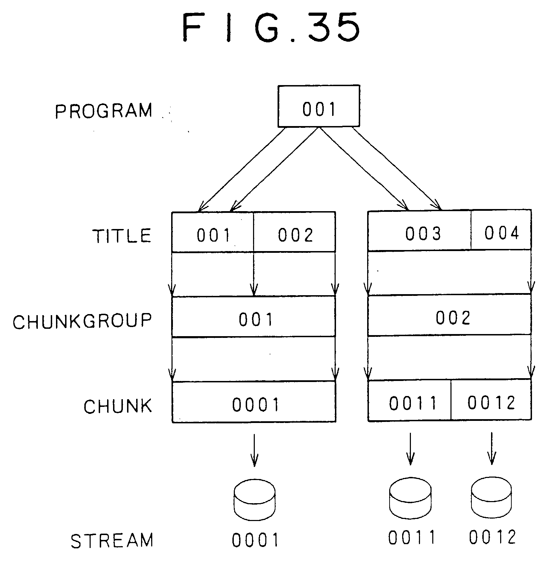

On the other hand, if the overwrite-record operation is completed while data is being written into an existing stream file, that is, if the overwrite-record operation is completed while data is being written into the stream file named CHUNK_0011.MPEG2 for example, the free area allocated for the overwrite operation on the stream file named CHUNK_0031.MPEG2 is released because no data is overwritten into the file. In this case, special title processing is carried out. To put it in detail, when an overwrite-record operation is started at the head of TITLE_003 and the operation is completed in the middle of it, the title is split. To be more specific, as shown in Fig. 35, new TITLE_003 is assigned to a region between the start position of the overwrite-record operation and the position of completion whereas TITLE_004 is given to an area following the region, that is, the rest of the area to which TITLE_003 is supposed to be assigned originally.

Next, an operation to play back a title is explained. Now, assume that an optical disc 1 having files shown in Fig. 26 is inserted into the optical-disc apparatus and a title is then played back from the disc 1. When the optical disc 1 is inserted into the apparatus, first of all, the CPU 21 reads out data from information files on the optical disc 1 and stores the data into the RAM unit 24. This processing is carried out by repeating the basic operation to read in data from an information file described earlier.

To be more specific, first of all, the CPU 21 reads out data from VOLUME.TOC and ALBUM.STR. Then, the CPU 21 examines the directory named TITLE to find out how many files with a name extension ".VDR" exist in the directory. A file with such a name extension is a file having title information. The number of files is equal to the number of titles. In the example shown in Fig. 26, the number of titles is three. Then, the CPU 21 reads out title information from the three files and stores the information into the RAM unit 24.

The CPU 21 controls the OSD control circuit 9 to let the OSD control circuit 9 generate character information, that is, information on titles recorded on the optical disc 1. The character information is synthesized by the synthesis circuit 8 with a video signal. A result of the synthesis is then output through the output terminal P1 to be displayed on the display unit. To be more specific, the length and attributes of each of the 3 existing titles existing in this example are displayed. The attributes include the name of the title and a date on which the title was recorded.

Assume that the user specifies TITLE_002 as a title to be played back for example. In the information file of TITLE_002, to be more specific, in the cgit_file_id field of title_info ( ) shown in Fig. 16, a file ID specifying CHUNKGROUP_001 is recorded. The CPU 21 records the file ID and stores CHUNKGROUP_001 in the RAM unit 24.

Then, the CPU 21 examines which CHUNK the start and end times of TITLE_002 correspond to. The start and end times are recorded respectively in the title_start_chunk_group_time_stamp and title_end_chunk_group_time_stamp fields of title_info ( ) shown in Fig. 16. The examination is carried out by comparison with information included in information on a CHUNKGROUP in which their respective chunks have been recorded. To be more specific, the examination is done by comparison with information recorded in the presentation_start_cg_time_count and presentation_end_cg_time_count fields of chunk_arrangement_info ( ) shown in Fig. 23. In this example, the start time of TITLE_002 is known to be in the midst of CHUNK_0001 as shown in Fig. 27. That is to say, it is obvious that, in order to play back TITLE_002 from the head thereof, the playback operation needs to be started from the middle of the CHUNK_0001.MPEG2 stream file.

Subsequently, the CPU 21 examines the stream in order to determine which part of the stream corresponds to the head of TITLE_002. That is to say, the CPU 21 computes the magnitude of an offset time (a time stamp) in the stream corresponding to the head of TITLE_002. Next, by using characteristic-point information in the CHUNK file, a playback start point corresponding to a point immediately before the start time is identified. In this way, an offset distance of the playback start point from the head of the file can be confirmed.

Then, by using a file-system operation instruction included in the processing program in advance, the CPU 21 confirms a physical address on the optical disc 1 in which CHUNK_0001.MPEG2 has been recorded and the length thereof. Further, the offset address of the playback start point found earlier is added to this physical address to finally confirm the address of the playback start point of TITLE_002.

Subsequently, the CPU 21 moves the optical head 2 to a read-out position determined by information on the address of the CHUNK_0001.MPEG2 file. The CPU 21 then sets the optical head 2, the RF & demodulation/modulation circuit 3 and the ECC circuit 4 in a read-out mode and positions the switch 5 on the side of the read-out channel buffer 6. After the position of the optical head 2 has been finely adjusted, a read-out operation using the optical head 2 is started. At that time, data read out from the file named CHUNK_0001.MPEG2 is stored in the read-out channel buffer 6.

The data stored in the read-out channel buffer 6 is then output to the decoder 7 to be decoded thereby. As results of decoding, the decoder 7 outputs video and audio signals. At a point of time the amount of the data read out from the optical disc 1, decoded by the decoder 7 and displayed on the display unit becomes equal to the size of the CHUNK_0001.MPEG2 file, the CPU 21 makes the playback operation transit to TITLE_003. An operation to play back information from TITLE_003 is carried out in the same way as TITLE_002.

As the operation to play back data from the recorded titles is completed or as an instruction to halt the read-out operation is received, the read-out and decoding processing is terminated.

It should be noted that, when a new disc or a disc with a different format is inserted into the optical-disc apparatus as the optical disc 1, the CPU 21 makes an attempt to read out VOLUME.TOC and ALBUM.STR from the inserted disc. However, these files usually do not exist in the newly inserted disc. In such a case, that is, in case VOLUME.TOC and ALBUM.STR can not be read out, the CPU 21 issues a message to make a request for an instruction from the user. In response to the message, the user gives an instruction to the CPU 21 to eject the optical disc 1 in case the newly inserted disc has a different format, or to initialize the optical disc 1 in case the newly inserted disc is a new disc even with the same format. As an alternative, the instruction may cause data on the newly inserted disc to be recovered by using some methods in case the data has been destroyed from the disc which has the same format.

Next, a title is further explained. TITLE_###.VDR shown in Fig. 15 is a file for storing information of a title. Information on a title is recorded in 1 title_info ( ) field. The number of title_info ( ) fields existing in TITLE_###.VDR is 1. Thus, as many TITLE_###.VDR files as titles exist in a volume.

A title number is not defined in title_info ( ) shown in Fig. 16. Instead, the title number is determined by the name of the file or the file id. That is to say, notation ### in the file name TITLE_###.VDR is a positive integer used as the title number. A title is not an information structure. Rather, a title is associated with a range in a chunk group. The range starts from a title index representing a start point and ends at another title index representing the head of the next title, or the range may be part of a range ending at the end point of the chunk group.

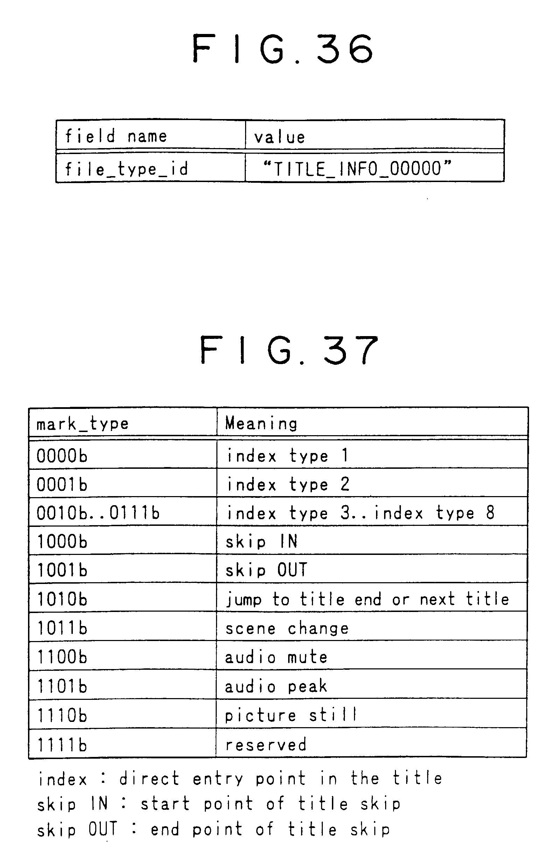

As shown in Fig. 36, file_type_id of TIThE_###.VDR shown in Fig. 15 is an area used for recording a string of 16 characters which are used as an identification indicating that the file is a file that includes title_info ( ). text_block ( ) is an area used for storing a variety of texts. Only text items allowing the use of text_block ( ) are recorded thereon.

As shown in Fig. 16, title_info ( ) is an area used for recording the start and end points of the title on the chunk group and other attributes of the title. In addition, title_info ( ) can include a flag indicating whether or not a seamless playback operation between titles can be assured in an operation to play back the titles in the order of title numbers. This flag allows the optical disc apparatus to obtain information on whether or not a seamless playback operation between titles can be carried out in advance and whether or not it is necessary to change the layout when merging titles.

A seamless playback operation within a title or a chunk group is assured. Since a boundary between titles is also a boundary between files, however, a seamless playback operation between titles can not be assured in some cases. It should be noted that the optical-disc apparatus has a function for changing the layout into a state allowing a seamless playback operation to be carried out in general.

title_info_length of title_info ( ) shown in Fig. 16 is an area used for recording the length of title_info ( ) expressed in terms of bytes. flags_for_title is a field for recording information on the corresponding title such as a write attribute (that is, whether or not an operation to change the title is permitted), a limit on the number of times the title can be played back and a rating level. cgit_file_id is an area used for recording the identification of a CHUNKGROUP_###.CGIT) information file serving as a base of the title.

title_start_chunk_group_time_stamp is an area used for recording a time of a playback start time of the title on a local time axis defined in the chunk group. title_start_chunk_group_time_stamp is a time to display pictures pointed to by the title index of the title. On the other hand, title_end_chunk_group_time_stamp is an area used for recording a time of a playback end time of the title on a local time axis defined in the chunk group. title_start_chunk_group_time_stamp is a playback end time of the chunk group or the value of a title index representing the start point of another title placed immediately after the title on the time axis.

title_playback_time ( ) is an area used for recording the playback time of the title, that is, a time-code value or the number of frames or fields. number_of_marks is an area used for recording the total number of all marks set in the title excluding title indexes. As shown in Fig. 37, mark_type is an area used for recording the type of a mark placed at any position in the title. A mark is utilized as a random access point in the title. mark_chunk_group_time_stamp is an area used for recording a time stamp on the time axis of the chunk group. The time stamp corresponds to a location at which the mark is set in the title. Time stamps are arranged into an order starting with the one with a smallest value. Indexes with time stamps representing the same start and end points of a title may exist. stuffing_bytes is an area used for recording stuffing bytes. Its length is 8 × n bits where n ≧ 0.

Next, a chunk group and a chunk are explained by referring to Figs. 21 to 24. CHUNKGROUP_###.CGIT is the name of a file for storing a definition of the time axis of a title, the configuration of chunks and processing of discontinuity points included in titles.

A title comprises a variety of bit streams such as streams including no video data and DV (digital video) bit streams. In a DV format, a time axis is prescribed in terms of frame units. If the STC (System Time Clock) of the MPEG2 video is used as a reference, the format varies, making it impossible to control a DV bit stream.

For this reason, a local time axis in a title is set. The time axis is not dependent on streams composing the title. A boundary between titles is set independently of a boundary between chunks. Thus, rather than setting a local time axis for each chunk (that is, by associating with a bit stream on a 1-on-1 basis) or setting a local time axis for each title, it is proper to set a local time axis for a set of chunks which includes a plurality of titles, that is, an arbitrary number of titles. A set of chunks is referred to as a chunk group.

In a chunk group, a single time axis is defined. On the time axis, chunks are stuck to determine times to display the chunks. That is to say, a chunk group is an arrangement of chunks in a state where the contents of a bit-stream file (a series of bytes) are expanded along the time axis. An arrangement of all chunks included in a bit-stream file along the time axis is referred to as a path. In a chunk group, a plurality of paths can be arranged. Paths that prescribe a playback start time and a playback end time of a chunk group are referred to as main paths. Other paths are known as sub paths. A sub path mainly represents information such as an audio chunk which is recorded later as additional information.

A point of connection between chunks does not necessarily coincide with a boundary between titles. Thus, a point of connection between chunks is not an attribute of a title. If a relation between chunks is included as an attribute of a chunk, however, there will be a contradiction at hierarchical layers. Information on such a point of discontinuity is positioned between a chunk and a title and it is thus considered to be appropriate to position at the chunk group hierarchical level.

To present what is described above in a summary, information of a chunk group includes how to lay out chunks along a time axis, an order to play back the chunks, a point of discontinuity at a point of connection between the end of a first chunk and the beginning of a next chunk to be played back after the first chunk.

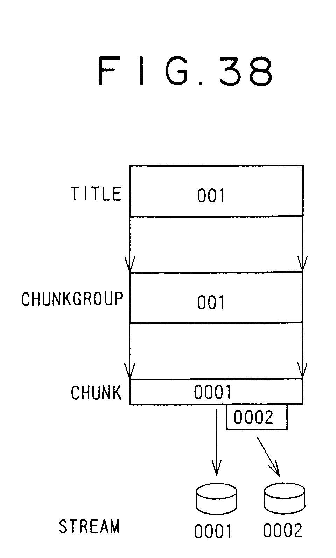

It should be noted that a chunk group can also be used to specify streams to be played back at the same time. For instance, in an example shown in Fig. 38, TITLE_001 specifies CHUNKGROUP_001 which specifies CHUNK_0001 and CHUNK_0002. At least portions of STREAM_0001 and STREAM_0002 specified by CHUNK_0001 and CHUNK_0002 respectively overlap each other on the time axis and will thus be played back at the same time.

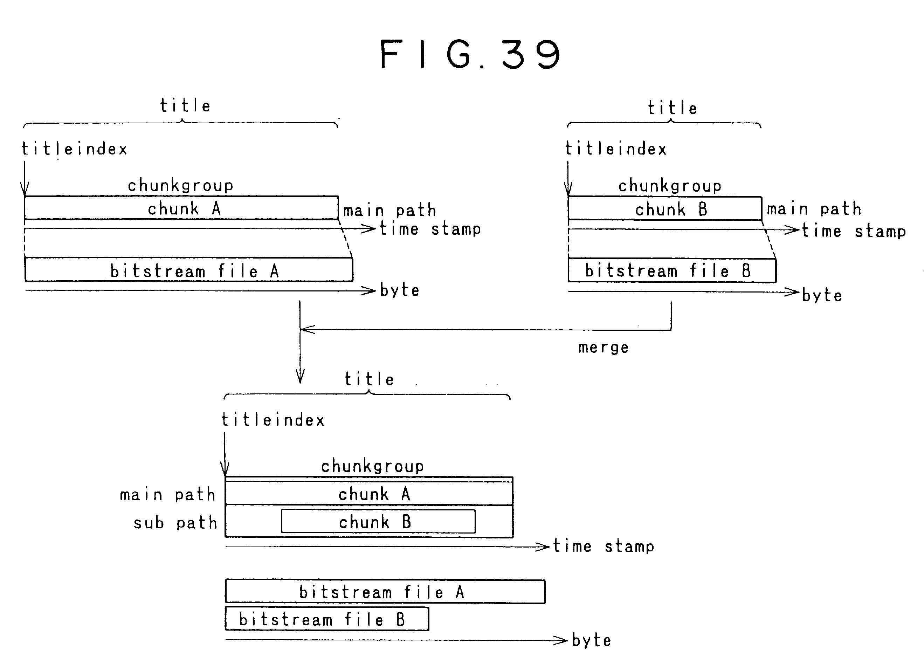

Fig. 39 is a diagram showing a case in which such a chunk group is generated. In this case, chunk A controlling bit stream A is synthesized together with chunk B controlling bit stream B. In the resulting chunk group, chunks A and B are controlled as a main path and a sub path respectively. At least portions of bit streams A and B overlap each other and will thus be played back at the same time.

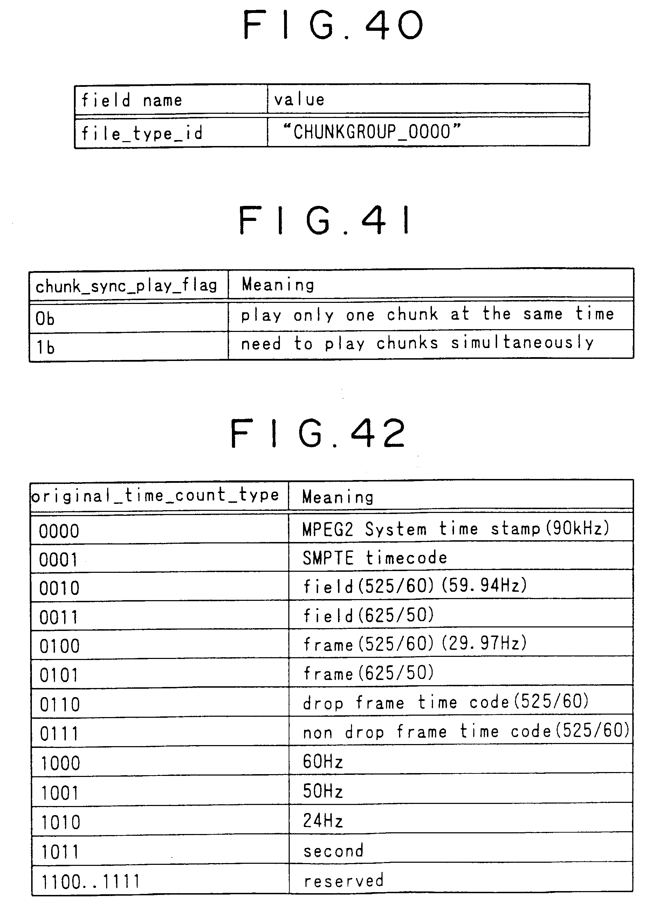

As shown in Fig. 40, file_type_id of CHUNKGROUP_ ###.CGIT shown in Fig. 21 is an area represented by a string of 16 characters which conform to ISO 646 and is used as an identification indicating that the file is a CHUNKGROUP_CGIT file. chunkgroup_time_base_flags is an area used for recording flags regarding a reference counter of the chunk group. chunkgroup_time_base_offset is a 64-bit area used for recording a start time of a reference time axis in the chunk group. The start time is set in a counter which counts up the number of 90-kHz clock pulses. text_block ( ) is an area used for storing a variety of texts. Only text items allowing the use of text_block ( ) are recorded thereon.

As shown in Fig. 22, chunk_connection_info ( ) is a file used for recording information on singular points such as video change-over points and audio-video synchronization points. chunk_connection_info ( ) prescribes status of connection between chunks. At a singular point such as a joint between 2 chunks obtained as a result of editing, it is necessary to transfer from one of the chunks to the other chunk in the middle of a GOP. Information on the vicinity of such an edit point is prescribed in chunk_connection_info ( ). A chunk never pertains to 2 or more chunk groups.

chunk_connection_info_length is an area used for recording the length of chunk_connection_info ( ) expressed in terms of bytes. number_of_chunks is an area used for recording the total number of chunks used in the chunk group. As shown in Fig. 41, chunk_sync_play_flag is a flag indicating whether or not it is necessary to play back 2 or more chunks at the same time. A value of 0 set in this flag indicates that only 1 chunk is to be played back. On the other hand, a value of 1 indicates that a plurality of chunks are to be played back at the same time.

chunk_arrangement_info_length of chunk_arrangement_info ( ) shown in Fig. 23 is an area used for recording the information of the length expressed in terms of bytes. To put it in detail, the length is the number of bytes counted starting with the first byte of chunk_arangement_info_length and ending with the last byte of transition_info ( ). chunk_info_file_id is an area used for recording a file identification indicating that the file is a chunk information file.

chunk_switch_stream_id is an area used for recording stream identification of a stream to be played back continuously in the case of 2 chunks connected to each other. Typically, an identification recorded in an MPEG2 packet header to identify video or audio data is used as this stream identification.
presentation_start_cg_time_count is an area used for recording a time-count value representing a display start time of a chunk as a time within the chunk group. The display start time of a chunk is expressed by a global time stamp defined in the chunk group. The operation to display the chunk is started at the display start time within the chunk group. On the other hand,
presentation_end_cg_time_count is an area used for recording a time-count value representing a display end time of a chunk as a time within the chunk group. The display end time of a chunk is expressed by a global time stamp defined in the chunk group.

As shown in Fig. 42, original_time_count_type is an area used for recording a type of a time count used in a stream. In the case of an MPEG2 video stream, for example, original_time_count_type has a value of '0000'.
number_of_start_original_time_count_extension is an area which is used for recording the number of time counts each representing a newly required start time in case a plurality of time counts are required. On the other hand, number_of_end_original_time_count_extension is an area which is used for recording the number of time counts each representing a newly required end time in case a plurality of time counts are required.
presentation_start_original_time_count is an area used for recording a time within a stream or a counter value corresponding to presentation_start_cg_time_count. On the other hand, presentation_end_original_time_count is an area used for recording a time within a stream or a counter value corresponding to presentation_end_cg_time_count.

tc_ext_attributes is an area used for recording attributes for time_count_extension. time_count_extension may include, among other data, information indicating which stream time_count_extension is applied to.
start_original_time_count_extension is an area used for recording a start counter value or a start time necessary for switching from a chunk to another. This information is optional and used when it is necessary to record a plurality of times or counter values. On the other hand, end_original_time_count_extension is an area used for recording an end counter value or an end time necessary for switching from a chunk to another. This information is optional and used when it is necessary to record a plurality of times or counter values. transition_info ( ) is an area used for recording information required for applying a special effect when switching from a chunk to another. The information may specify a chunk, a switching time and the type of the special effect to mention a few.

CHUNK_%%%%.ABST shown in Fig. 24 is the name of a file used for recording characteristic points extracted from a bit stream composing a chunk identified by a sub_file number represented by notation %%%%. The file includes information such as a start byte position, a length and attributes for each of units composing a bit stream such as a GOP and an audio frame. GOP information and audio frame information are collected as a CHUNK _%%%%.ABST file for each chunk (sub-file).

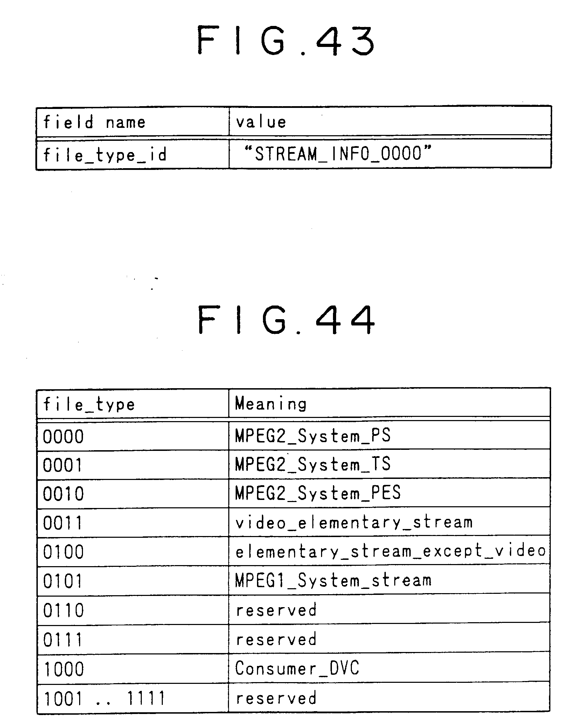

As shown in Fig. 43, file_type_id of CHUNK _%%%%.ABST is an area used for recording an identifier indicating that the file includes stream_info ( ).
file_type_id is a string of 16 characters conforming to ISO 646.

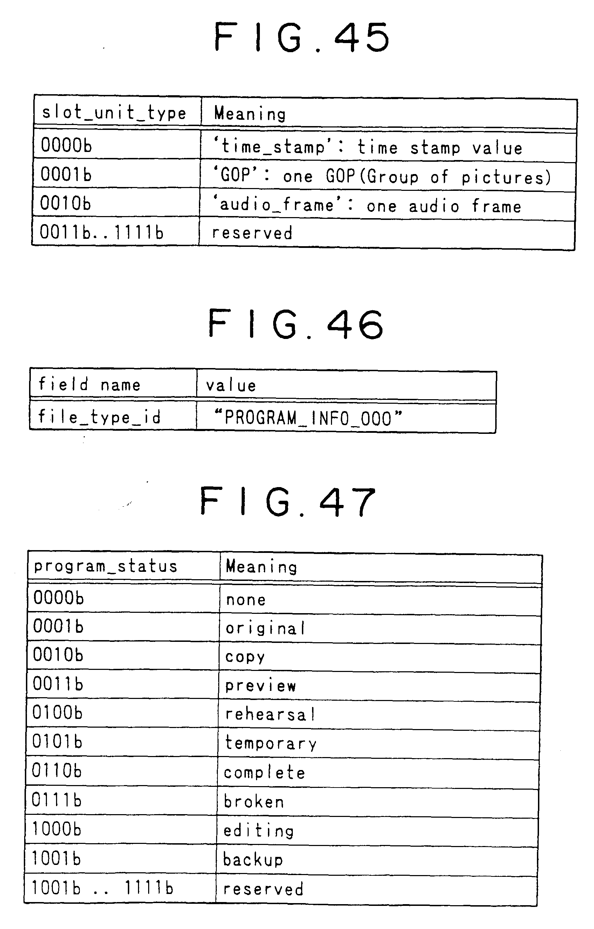

As shown in Fig. 44, info_type shown in Fig. 24 is an area used for recording the type of stream_info ( ) that follows. info_type identifies the type of the stream. number_of_programs is an area used for recording the number of programs included in the MPEG2 TS (Transport Stream). In order to obtain the number of such programs, it is necessary to fetch a PSI (Program Specific Information). In the case of an MPEG stream other than a TS, the number of programs is 1. number_of_streams is an area for recording the number of streams used in this program. The number of streams is equal to the number of different PIDs (packet identifications) in the case of a TS. In the case of an MPEG stream other than a TS, the number of streams is equal to the number of streams having stream identifications different from each other.

stream_identifier is an area used for recording the identification of a stream or an extended identification of a stream. In the case of a TS, a PID is utilized.

slot_unit_type is an area used for recording how to delimit a stream in the case of a stream delimited at fixed intervals as shown in Fig. 45. In the case of a time delimiter index such as a delimiter for a frame and a field, a time stamp value is used. slot_time_length is an area used for recording a time corresponding to a slot. slot_time_length is the value of a time stamp using a counter for counting the number of 90-kHz clock pulses. number_of_slots is an area used for recording the number of slot_info ( ) fields included in CHUNK_%%%%.ABST.
number_of_I_pictures_in_a_slot is an area used for recording the number of I-pictures included in a slot.
number_of_I_pictures_in_a_slot is an integer in the range 1 to 15. It should be noted, however, that the number of I-pictures included in a slot immediately preceding a slot having a GOP header as a head thereof may be smaller than number_of_I_pictures_in_a_slot. When setting a slot having the picture header of an I picture as a head thereof not succeeding immediately a GOP header,
number_of_I_pictures_in_a_slot is used.

Next, information on a program shown in Figs. 17 and 18 is further explained. Only one program ( ) field exists in PROGRAM_$$$.PGI. As many PROGRAM_$$$.PGI files as programs exist in a volume. The number of a program is not defined in program ( ). Instead, the number of a program is determined by the name of the file or the file id.

As shown in Fig.46, file_type_id of PROGRAM_$$$.PGI shown in Fig. 17 is an area used for recording a string of 16 characters used as an identification indicating that the file is a file that includes program ( ) thereon.
text_block ( ) is formed for storing a variety of texts. Only text items allowing the use of text_block ( ) are recorded thereon.

flags_for_program of program ( ) shown in Fig. 18 is an area used for recording a variety of flags for the program such as a write attribute (whether or not an operation to change the program is permitted), a limit on the number of times the program can be played back and a rating level.

As shown in Fig. 47, program_status is an area used for recording attributes of the program. This field is set optionally. If it is desired to set nothing in this field, however, "none" must be described therein.

program_playback_time ( ) is an area used for recording the playback time of the program.
number_of_play_sequences is an area used for recording the number of play_sequences used in the program. In this example of the format, however, the number of play sequences is set at a fixed value of 1. That is to say, since at 1 program = 1 channel play back operation is set in this example of the format, in order to implement an operation to play back 2 channels at the same time, the simultaneous playback specification of 2 programs needs to be enabled. If there is no restriction as to 1 program = 1 channel playback operation, with 1 program, a 2-channel simultaneous playback operation is possible. In an operation to play back 2 play sequences at the same time by using a multichannel I/O, the optical-disc apparatus determines an output channel to which each play sequence is assigned.

number_of_play_lists is an area used for recording the number of play lists used in this play sequence. In this example, the number of play lists is set at 1.
play_list_start_time_stamp_offset is an area used for recording a time in a play sequence obtained as a result of counting by means of a timer starting from the start time of the play sequence. This value is a start time of the play list. In a program, only 1 play list is allowed to exist in a play sequence. The time-unit system is based on a frequency of 90 kHz. That is to say, the smallest time unit is 1/90,000 seconds. stuffing_bytes is an area used for recording stuffing bytes. Its length is 8× n bit where n ≧ 0.

Next, title edit processing to split and move a title is explained. In a title splitting operation, an existing title is split at a position specified by the user to create new titles. In a title moving operation, the order of titles is changed. The format structure of a title information file described above is a structure that allows a title splitting operation and a title moving operation to be carried out with ease. That is to say, according to the formats described above, a chunk group, that is, a structure body comprising a collection of bit-stream files, and a title, that is, a structure body recognized by the user as a title are broken down into pieces of information in such a way that, in operations to split or move a title, it is not necessary to change information under a chunk group.

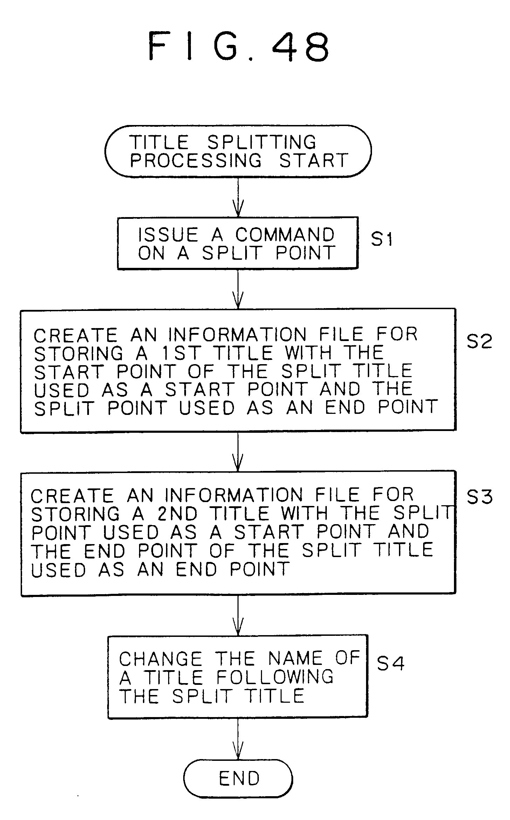

Next, processing to split a title is explained by referring to a flowchart shown in Fig. 48. As shown in the figure, the processing starts with a step S1, at which the user specifies a split point. For example, a predetermined location in TITLE_002 shown in Fig. 27 is specified as a split point. The flow of the processing then goes on to a step S2 at which the CPU 21 creates an information file named TITLE_002.VDR for a first title having the start point of the title to be split, that is, TITLE_002 before splitting, as its start point and the split point as its end point.

Then, the flow of processing proceeds to a step S3 at which the CPU 21 creates an information file named TITLE_003.VDR for a second title having the split point as its start point and the end point of the title to be split, that is, TITLE_002 before splitting, as its end point.

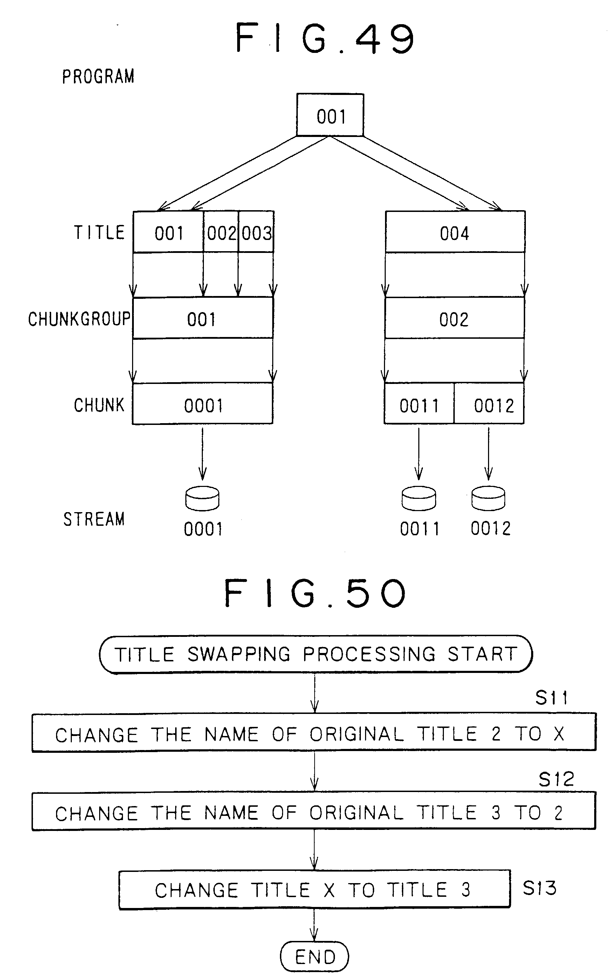

Subsequently, the flow of the processing continues to a step S4 at which the CPU 21 changes the name of a title following the split title. To be more specific, TITLE_003 shown in Fig. 27 is changed to TITLE_004 to result in titles shown in Fig. 49.

As described above, information on a chunk group, chunks and streams is not changed at all even if a title is split.

Next, processing to swap titles is explained by referring to a flowchart shown in Fig. 50. To be more specific, TITLE_002 shown in Fig. 49 is swapped with TITLE_003 shown in the same figure.

As shown in Fig. 50, the processing begins with a step S11 at which the CPU 21 changes the name TITLE_002 of the title having a number of 002 to TITLE_X for a title with a number X. The flow of the processing then goes on to a step S12 at which the CPU 21 changes the name TITLE_003 of the title having a number of 003 to TITLE_002 for the title with the number 002. Then, the flow of the processing proceeds to a step S13 at which the CPU 21 changes the name TITLE_X of the title having the number X to TITLE_003 for the title with the number 003.

As described above, the CPU 21 changes the name TITLE_002 of the title having the number 002 to TITLE_X for a title with the number X first before changing the name TITLE_X of the title having the number X to TITLE_003 for the title with the number 003. It is because of avoiding such that, if the CPU 21 changes the name TITLE_002 of the title having the number 002 to TITLE_003 for the title with the number 003 right away, there will be 2 titles having the same number 003 before the CPU 21 changes the name TITLE_003 of one of the 2 titles having the number 003 to TITLE_002 for the title with the number 002.

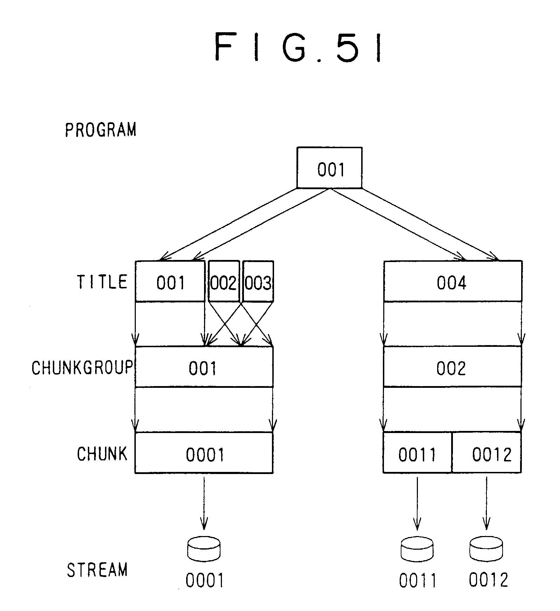

In the processing shown in Fig. 50, TITLE_002, the title with the number 002, is swapped with TITLE_003, a title with the number 003, as shown in Fig. 51.

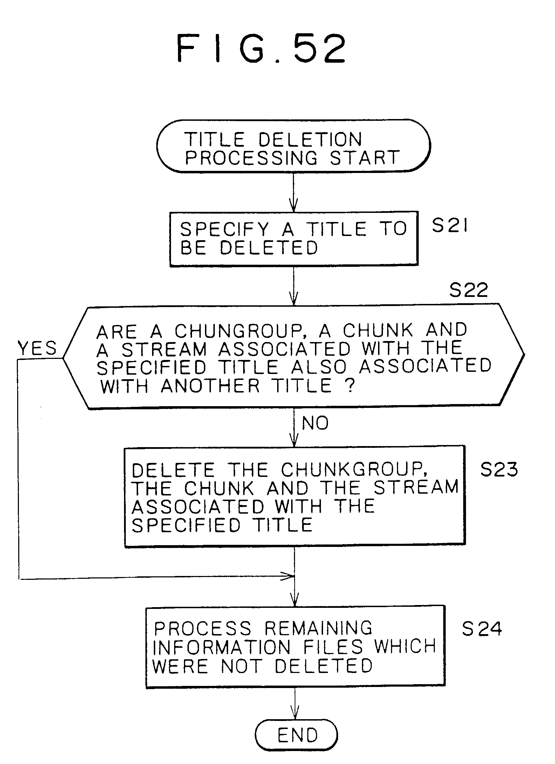

Fig. 52 shows a flowchart representing processing to delete a title. As shown in the figure, the processing begins with a step S21 at which the user specifies a title to be deleted. The flow of the processing then goes on to a step S22 at which the CPU 21 forms a judgment as to whether or not a chunk group, chunks and streams associated with the specified title are also associated with another title. If they are not associated with another title, the flow of the processing proceeds to a step S23 at which the CPU 21 deletes the chunk group, the chunks and the streams associated with the specified title.

If the outcome of the judgment formed at the step S22 indicates that the chunk group, the chunks and the streams associated with the specified title are also associated with another title, on the other hand, deletion of the chunk group, the chunks and the streams will cause them to cease from existing. Thus, in this case, the operation carried out at the step S23 is skipped.

After completing the operation carried out at the step 23 or if the outcome of the judgment formed at the step S22 indicates that the chunk group, the chunks and the streams associated with the specified title are also associated with another title, the flow of the processing continues to a step S24 at which the CPU 21 processes remaining information files, that is, information files that were not deleted. To put it in detail, since a title was deleted, the numbers assigned to titles following the deleted one are each incremented by 1. It should be noted, however, that if the outcome of the judgment formed at the step S22 indicates that the chunk group, the chunks and the streams associated with the specified title are also associated with another title, the specified title is in essence not deleted. In this case, the OSD control circuit 9 outputs a message stating that the specified title is in essence not deleted to the display unit.

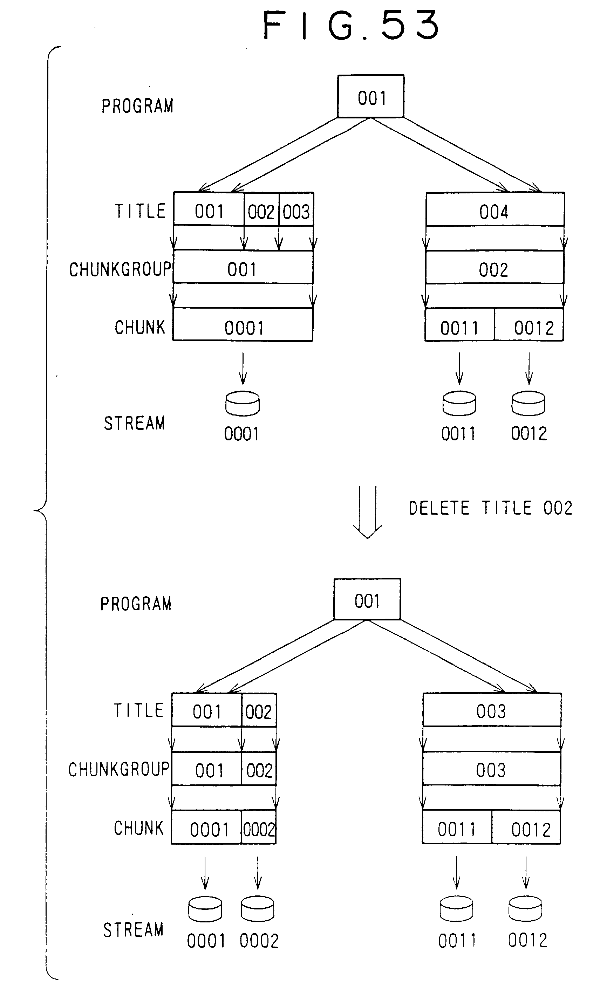

After TITLE_002 has been deleted as described above, the former TITLE_003 file is changed to TITLE_002 and the former TITLE_004 file is changed to TITLE_003 as shown in Fig. 53. At the same time, the former CHUNKGROUP_001 chunk group is split into CHUNKGROUP_001 and CHUNKGROUP_002 and the former CHUNKGROUP_002 chunk group is changed to CHUNKGROUP_003. In addition, the former STREAM_001 bit stream is split into STREAM_001 and STREAM_002.

The above description shows that, in a typical operation to delete a title, a stream is deleted to increase the size of a free area. On the other hand, there is also a technique to delete a title by erasing only information on the title which is used as control information. In this case, a stream occupying a physical area is not actually deleted so that the chunk group, chunks and streams associated with the title are not changed at all even if the title is deleted.

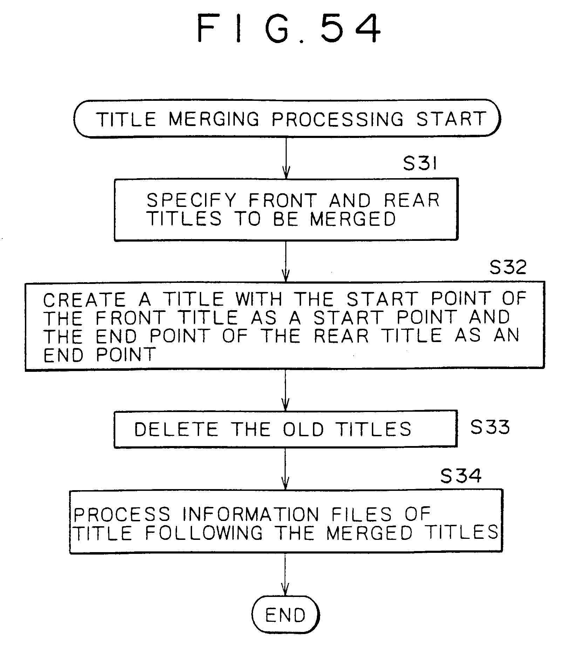

Next, processing to merge titles is explained by referring to a flowchart shown in Fig. 54. As shown in the figure, the processing begins with a step S31 at which the user specifies titles to be merged. For example, titles to be merged are TITLE_002 and TITLE_003 shown in Fig. 49. The flow of the processing then goes on to a step S32 at which the CPU 21 creates a title having the start point of the head title, that is, TITLE_002, as a start point thereof and the end point of the tail title, that is, TITLE_003, as an end point thereof. In this example, the created file is named TITLE_002.

Then, the flow of the processing proceeds to a step S33 to carry out deletion processing of titles prior to the merging. In this case, the former TITLE_002 title and TITLE_003 are deleted. Subsequently, the flow of the processing continues to a step S34 at which the CPU 21 processes information files of titles following the merged titles. To be more specific, in this case, TITLE_004 shown in Fig. 49 is changed to TITLE_003. As a result, titles shown in Fig. 27 are obtained.

It should be noted that, in the example given above, 2 titles pertain to a same chunk group and are adjacent to each other. In another case, 2 titles to be merged have their own chunk groups, chunks and streams. In processing to merge such 2 titles, the chunk groups, the chunks and the streams are rearranged in an order by which the titles are merged to form a single chunk group.

Next, a program is explained. An operation to play back a program means an operation to collect necessary portions of titles and to play back the collected portions without carrying out irreversible editing of the raw material, that is, the stream. A structure for implementing this operation is referred to as a program. An operation to play back a program is also referred to as a pointer playback operation.

A program comprises of a plurality of play sequences which each comprises a plurality of play lists. A play sequence controls an output channel. Which output-channel of the optical-disc apparatus is assigned to a play sequence is determined in accordance with specifications of the optical-disc apparatus.

A play list of a play sequence is used for expressing overlaps of decoding and display operations among play items along the time axis. To put it in detail, play items are arranged in a play list in such a way that pieces of processing of the play items do not overlap on the time axis. Thus, play items in a play list can be processed sequentially.

In this format example, however, a program has only 1 play sequence which has only 1 play list.

A play list comprises play items which are arranged so that there are no overlaps in display times. In a program, a play item is represented by a pair of an in-point and an out-point which point to an area in a title. At a joint between play items, a playback operation may be seamless or may not so sometimes. That is to say, a seamless playback operation is not assured.

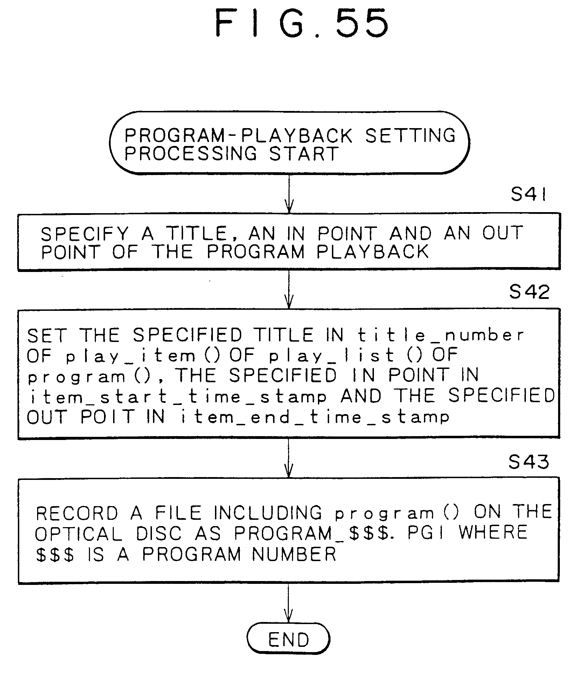

Processing to set an operation to play back a program is explained by referring to a flowchart shown in Fig. 55. Now, assuming for example that in a state where PROGRAM_001 exists as shown in Fig. 27, another program PROGRAM_002 is created.

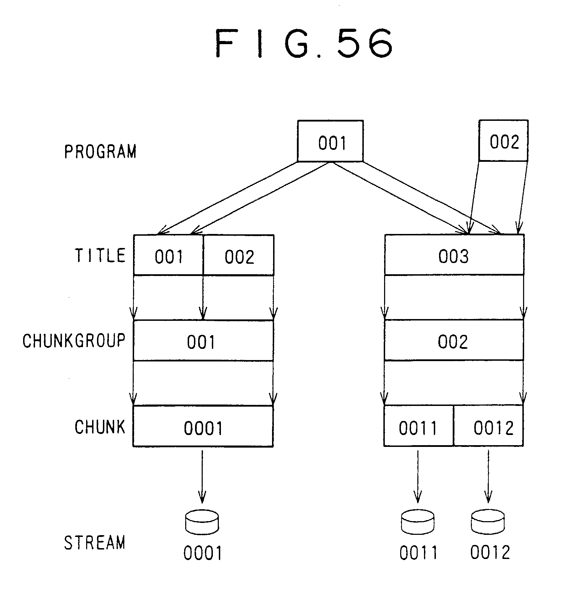

As shown in Fig. 55, the processing begins with a step S41 at which the user specifies a title and in and out-points in the title to play back. For example, predetermined first and second locations in TITLE_003 are specified as in and out-points respectively as shown in Fig. 56.

The flow of the processing then goes on to a step S42 at which the CPU 21 sets the title specified at the step S41, that is, TITLE_003, in title_number of play_item ( ) of play_list of program ( ), the in-point specified at the step S41 in item_start_time_stamp and the out-point specified at the step S41 in item_end_time_stamp. It should be noted that play_item ( ), play_list and program ( ) are shown in Figs. 20, 19 and 18 respectively.

Then, the flow of the processing proceeds to a step S43 at which the CPU 21 creates PROGRAM_$$$.PGI as a file for storing program ( ) and records the file into the optical disc 1. It should be noted that notation $$$ in the name of the file is the number of the created program. Thus, notation $$$ is 002 in this case. As described above, PROGRAM_002 shown in Fig. 56 is created.

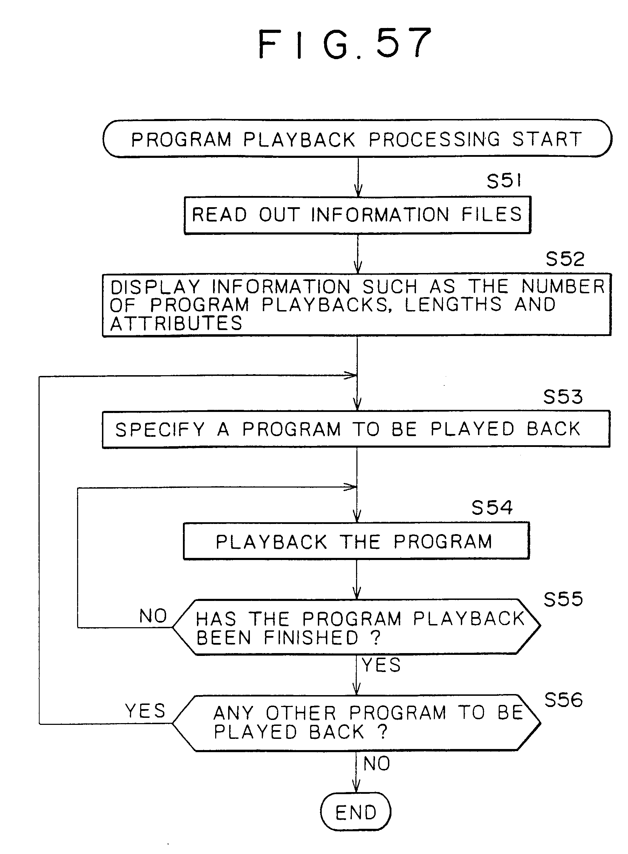

Next, processing to play back a program is explained by referring to a flowchart shown in Fig. 57. As shown in the figure, the processing begins with a step S51 at which the CPU 21 reads out information files from an optical disc 1 which includes information like ones shown in Fig. 27 or 56 by repeating the basic operation to read in an information file described earlier as soon as the user mounts the optical disc 1 on the optical-disc apparatus. The CPU 2firstores the information files into the RAM unit 24.

To put it in detail, first of all, the CPU 21 reads out VOLUME.TOC and ALBUM.STR and then makes an inquiry to the file system about the number of files each with an extension of ".PGI" placed under a directory named "program". A file with the extension ".PGI" is a file for storing information on a program playback file. The number of files each with the extension ".PGI" is the number of programs that can be played back. In the example shown in Fig. 27, the number of files each with an extension of ".PGI" is 1. In an example shown in Fig. 56, on the other hand, the number of files each with an extension of ".PGI" is 2.

The flow of the processing then goes on to a step S52 at which the CPU 21 controls the OSD control circuit 9 to read out information such as the number of programs that can be played back, their lengths and their attributes from the RAM unit 24 and output them to the display unit. The attributes include the name of each program and the time and the date at which each program was recorded.

Then, the flow of the processing proceeds to a step S53 at which the user specifies a program to be played back. Since there are 2 programs that can be played back in the example shown in Fig. 56, the user specifies one of them by operating the input unit 14. As the user specifies a program to be played back, the flow of the processing continues to a step S54 at which the CPU 21 carries out an operation to play back the specified program.

In the operation to play back the specified program carried out at the step S54, the program is played back from a position indicated by the specified in-point to a position indicated by the specified out-point. For example, in the case of an operation to play back PROGRAM_001 of the example shown in Fig. 56, a range from an in-point to an out-point in TITLE_001 and a range from an in-point to an out-point in TITLE_003 are played back. In the case of an operation to play back PROGRAM_002, on the other hand, a range from an in-point to an out-point in TITLE_003 is played back.

Then, the flow of the processing goes on to a step S55 at which the CPU 21 forms a judgment as to whether or not the operation to play back a program has been completed. If the operation has not been completed yet, the flow of the processing goes back to the step S54 to repeat the execution of the processing at that step and the subsequent processing. If the outcome of the judgment formed at the step S55 indicates that the operation to play back a program has been completed, on the other hand, the flow of the processing proceeds to a step S56 at which the CPU 21 forms a judgment as to whether or not there is another program to be played back. If there is another program to be played back, the flow of the processing goes back to the step S53 to repeat the execution of the processing at that step and the subsequent processing. If the outcome of the judgment formed at the step S56 indicates that all programs have been played back, on the other hand, the processing is terminated.

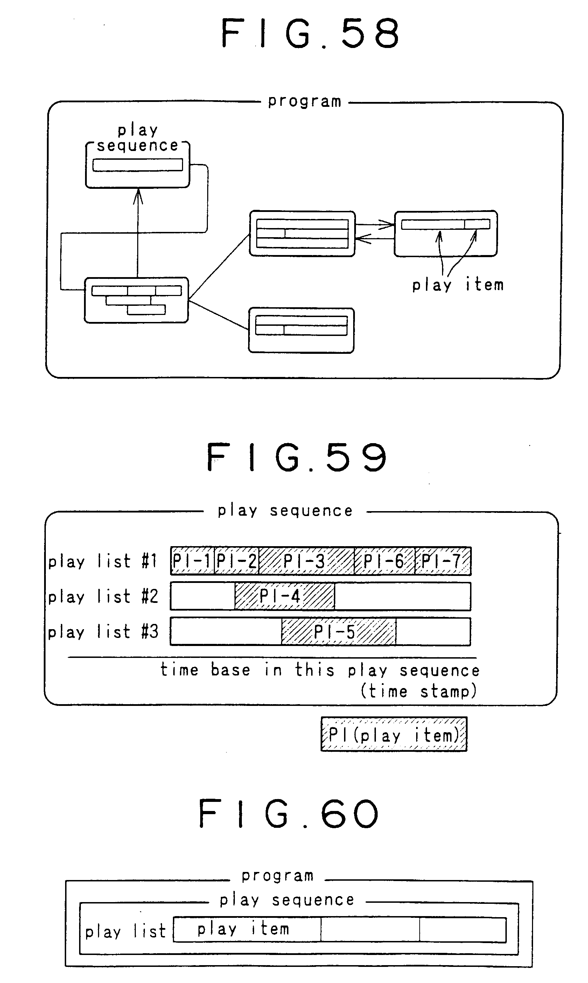

Relations among a program, a play sequence and play items are shown in Figs. 58 to 60.

As shown in Fig. 58, a program comprises a plurality of play sequences which are combined in a predetermined order. As shown in Fig. 59, a play sequence comprises any arbitrary number of play lists. A play list describes any arbitrary numbers of play items corresponding to predetermined times (time stamps).

In the example shown in Fig. 59, play list 1 describes play item 1, play item 2, play item 3, play item 6 and play item 7 to be played back sequentially one item after another. On the other hand, play list 2 describes play item 4 to be played back with timing to start from a middle of play item 2 and to end at a middle of play item 3. As for play list 3, play item 5 is to be played back with timing to start from a middle of play items 3 and 4 and to end at a middle of play item 6. Thus, in an operation to play back this play sequence, play item 1, play item 2, play item 3, play item 6 and play item 7 are played back sequentially one item after another and, at the same time, play item 4 is played back with timing to start from a middle of play item 2 and to end at a middle of play item 3 while play item 5 is played back with timing to start from a middle of play items 3 and 4 and to end at a middle of play item 6.

Relations among a program, play sequences and play items are summarized into a single diagram shown in Fig. 60. In a word, a program comprises any arbitrary number of play sequences each composed of any arbitrary number of play lists in which each consists of any arbitrary numbers of play items.

As described so far, the present invention has been exemplified by an application thereof to an optical disc apparatus. It is worth noting, however, that the present invention can also be applied to a case in which information is recorded onto or played back from other types of recording medium.

It should be noted that, as a presentation medium for presenting computer programs to be executed to carry out the processing described above to the user, communication media such as a network and a satellite can be utilized in addition to recording media like a magnetic disc, a CD-ROM and a solid-state memory device.

As described above, in the information processing apparatus according to the present invention, a plurality of pieces of data are controlled by first control means on a 1-on-1 basis and any arbitrary number of first control means are controlled by a second control means, any arbitrary range in which is controlled by a third control means. In addition, in the information processing method and the presentation medium according to the present invention, any arbitrary number of control states at first control steps are controlled at a second control step and a control state of any arbitrary range at the second control step is controlled at a third control step. Furthermore, in the recording medium according to the present invention, as control information, first control means, a second control means and a third control means are recorded. As a result, editing can be carried out with ease in a short period of time.

## Claims

1. An information processing apparatus comprising:
a first control means for controlling a plurality of pieces of data on a 1-on-1 basis;
a second control means for controlling any arbitrary number of said first control means; and
a third control means for controlling any arbitrary range in said second control means.

2. An information processing apparatus according in claim 1 characterized in that said second control means controls said arbitrary number of said first control means so that said pieces of data controlled by said first control means are played back with at least portions of said data overlapping each other on a time axis.

3. An information processing apparatus according in claim 1 characterized in that said first control means is a unit of said data and said third control means is a unit of said data seen from a user.

4. An information processing apparatus according in claim 1 characterized in that, in a range of said third control means or said second control means, a seamless operation to play back said data is made possible.

5. An information processing method comprising the steps of:
controlling a plurality of pieces of data on a Ion-1 basis;
controlling any arbitrary number of control states at said first control steps; and
controlling a control state of any arbitrary range at said second control step.

6. A presentation medium used for presenting a program for making an information processing apparatus carry out processing comprising:
a first control step of controlling a plurality of pieces of data on a 1-on-1 basis;
a second control step of controlling any arbitrary number of control states at said first control steps; and
a third control step of controlling a control state of any arbitrary range at said second control step.

7. A recording medium used for recording data and control information for controlling said data, said recording medium characterized in that said control information comprises:
a first control means for controlling a plurality of pieces of data on a 1-on-1 basis;
a second control means for controlling any arbitrary number of said first control means; and
a third control means for controlling any arbitrary range in said second control means.
